# EUROPÄISCHE PATENTSCHRIFT

(11) **EP 2 809 534 B1**
(45) Veröffentlichungstag und Bekanntmachung des Hinweises auf die Patenterteilung: **19.07.2017**
(21) Anmeldenummer: 12819057.6
(22) Anmeldetag: 28.11.2012
(51) Int. Cl.: B60G 17/052, B60G 17/056

(54) **DRUCKLUFTVERSORGUNGSANLAGE, PNEUMATISCHES SYSTEM UND VERFAHREN ZUM BETREIBEN EINER DRUCKLUFTVERSORGUNGSANLAGE BZW. EINES PNEUMATISCHEN SYSTEMS**
COMPRESSED AIR SUPPLY SYSTEM, PNEUMATIC SYSTEM AND METHOD FOR OPERATING A COMPRESSED AIR SUPPLY SYSTEM AND/OR PNEUMATIC SYSTEM
INSTALLATION D'ALIMENTATION EN AIR COMPRIMÉ, SYSTÈME PNEUMATIQUE ET PROCÉDÉ POUR FAIRE FONCTIONNER UNE INSTALLATION D'ALIMENTATION EN AIR COMPRIMÉ OU UN SYSTÈME PNEUMATIQUE

(30) Priorität: 31.01.2012 DE 102012001734
(43) Veröffentlichungstag der Anmeldung: 10.12.2014
(73) Patentinhaber: WABCO GmbH, 30453 Hannover (DE)
(72) Erfinder: MEIER, Jörg, 31840 Hessisch Oldendorf (DE)
(74) Vertreter: Lauerwald, Jörg
(86) Internationale Anmeldenummer: PCT/EP2012/004893
(87) Internationale Veröffentlichungsnummer: WO 2013/113345

(56) Entgegenhaltungen:
- EP-B1- 0 978 397
- EP-B1- 1 165 333
- DE-A1- 10 301 119
- DE-A1- 19 528 852
- DE-B4- 10 223 405

## Beschreibung

Die Erfindung betrifft eine Druckluftversorgungsanlage gemäß dem Oberbegriff des Anspruchs 1. Die Erfindung betrifft auch ein pneumatisches System mit einer solchen Druckluftversorgungsanlage. Weiter betrifft die Erfindung ein Verfahren zum Steuern einer Druckluftversorgungsanlage, insbesondere zum Betreiben einer Pneumatikanlage.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbälgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Solche Systeme werden in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderung hinsichtlich Schnelligkeit, Flexibilität und Verlässlichkeit einer Druckluftversorgungsanlage erhöht.

Eine Druckluftversorgungsanlage zur Verwendung in einem pneumatischen System mit einer Pneumatikanlage, beispielsweise einer zuvor beschriebenen Luftfederanlage, wird mit Druckluft aus einer Druckluftzuführung, beispielsweise im Rahmen eines Druckniveaus von 5 bis 20 bar, betrieben. Die Druckluft wird mittels eines Luftverdichters, mit beispielsweise einem Kompressor oder gegebenenfalls einem Doppel-Kompressor, der Druckluftzuführung zur Verfügung gestellt. Die Druckluftzuführung ist zur Versorgung der Pneumatikanlage mit einem Druckluftanschluss pneumatisch verbunden und andererseits mit einem Entlüftungsanschluss pneumatisch verbunden. Über eine Entlüftungsventilanordnung bildende Magnetventilanordnung kann durch Ablassen von Luft in einem oder mehreren Entlüftungsanschlüssen die Druckluftversorgungsanlage zur Umgebung hin entlüftet werden.

Zur Sicherstellung eines langfristigen Betriebs der Druckluftversorgungsanlage weist diese einen Lufttrockner auf, mit dem die dem System zuzuführende Druckluft zu trocknen ist. Dadurch wird die Ansammlung von Feuchtigkeit im Pneumatiksystem vermieden, was anderenfalls bei vergleichsweise niedrigen Temperaturen zu ventilschädigender Kristallbildung führen könnte und darüber hinaus zu ungewünschten Defekten in der Druckluftversorgungsanlage und in der Pneumatikanlage. Ein Lufttrockner weist ein Trockenmittel auf, üblicherweise eine Granulatschüttung, welche von der Druckluft durchströmbar ist, so dass die Granulatschüttung --bei vergleichsweise hohem Druck-- in der Druckluft enthaltende Feuchtigkeit durch Absorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus --bei vergleichsweise niedrigem Druck-- mit der getrockneten Druckluft aus dem Luftfederungssystem im Gegenstrom oder Gleichstrom relativ zur Befüllrichtung durchströmt wird. Dazu kann die Entlüftungsventilanordnung geöffnet werden. Für eine solche --auch als Druckwechseladsorption bezeichneteAnwendung hat es sich als wünschenswert erwiesen, eine Druckluftversorgungsanlage flexibel und gleichzeitig verlässlich auszulegen, insbesondere eine vergleichsweise schnelle Entlüftung mit einem dennoch für eine Regeneration des Lufttrockners ausreichendem Druckwechsels zu ermöglichen.
Unter anderem im Hinblick auf die vorgenannten Gegebenheiten hat es sich als wünschenswert erwiesen, den Entlüftungsvorgang für eine Druckluftversorgungsanlage vergleichsweise verlässlich und effektiv durchzuführen; daraus entsteht auch das Bedürfnis, eine möglichst hohe Entlüftungsdruckamplitude, d. h. von einem Betriebsdruck auf einen Entlüftungsdruck zu erreichen, wobei dennoch die Komponenten der Magnetventilanordnung nicht überdimensioniert oder zu komplex aufgebaut sein sollten.
So genannte direkt entlüftende Schaltungen --ohne Steuerventil-- können eine eingangs genannte Funktionalität einer Magnetventilanordnung mit Steuer- und Entlüftungsventil entbehrlich machen. Dennoch kommt bei solchen direkt entlüftenden Schaltungen zum Tragen, dass eine Nennweite des Entlüftungsventils einerseits vergleichsweise groß ausgelegt werden sollte, um eine schnelle Entlüftung zu ermöglichen und gleichwohl begrenzt ist durch die Stromaufnahme einer Magnetspule für das Entlüftungsventil, so dass im Ergebnis nur bedingt hohe Schaltdruckdifferenzen erreichbar werden. Die gattungsgemäße DE19528852A1 beschreibt eine Niveauregeleinrichtung mit einer die Luftfedern der linken und rechten Seite trennenden Schaltung von Rückschlagventilen und einem pneumatisch vorgesteuerten Entlüftungsventil, wobei der Steuerdruck des Entlüftungsventils direkt und unmittelbar aus den Luftfedern zugeführt wird. Zum Ablassen von Druckluft aus den Luftfedern ist das elektrische Steuerventil zu betätigen, um das pneumatische Ablassventil anzusteuern. Beim Ablassen verläuft der Luftweg über eine Ablassdrossel, ein Restdruckhalteventil, einen Trockner sowie das pneumatisch angesteuerte Ablassventil. Das ablassseitige Rückschlagventil kann als Restdruckhalteventil ausgeführt sein, wobei hierdurch der Druck in der Entlüftungsleitung am Entlüftungsventil bis auf den Umgebungsdruck absinken kann, wenn das Restdruckhalteventil geschlossen ist und der Druck in der Hauptleitung zu den Luftfedern ausreicht, um das pneumatische Entlüftungsventil weiterhin in der geschalteten und geöffneten Stellung zu halten. Aber auch die anderen Rückschlagventile können als Restdruckhalteventile ausgeführt sein. Die DE10301119A1 beschreibt ein Luftfederungssystem für Fahrzeuge mit Luftfedern und einem Luftdruckspeicher. Zur Regeneration des Lufttrockners oder zur Niveauabsenkung der Luftfedern wird dem pneumatisch vorgsteuerten Entlüftungsventil entweder der Druck aus dem Luftdruckspeicher oder der Druck aus den Luftfedern zugeführt, wobei dieser Steuerdruck gleichzeitg in Strömungsrichtung vor der Ablassdrossel ansteht und zur Regeneration des Lufttrockners über die Ablassdrossel, das Ablassrückschlagventil, den Lufttrockner und das geöffnete Entlüftungsventil in die Umgebung durchgeleitet wird.

EP 1 165 333 B2 offenbart prinzipiell einen vergleichsweise einfachen Aufbau einer Druckluftversorgungsanlage der eingangs genannten Art, die eine Magnetventilanordnung mit einem Steuerventil zur Steuerung eines Entlüftungsventils aufweist. Das Steuerventil ist mit einem Ventilanschluss in einer an einen Drucksteueranschluss des Entlüftungsventils angeschlossenen Steuerleitung angeschlossen. Das Entlüftungsventil ist mit einem Ventilanschluss in der Entlüftungsleitung angeschlossen. Solche und ähnliche --grundsätzlich ein schnelles Entlüftungsschalten ermöglichende-- Druckluftversorgungsanlagen haben sich in ihrem grundsätzlichen Aufbau bewährt. Das Steuerventil ist regelmäßig als ein 3/2-Wegeventil gebildet und wird durch einen von einem Luftbalg der pneumatischen Hauptleitung zur Verfügung gestellten Druck bzw. einem von diesem abgezweigten Steuerdruck geschaltet. Der so an den Drucksteueranschluss des Entlüftungsventils weitergebbare Steuerdruck aktuiert das Öffnen des Ventilanschlusses des Entlüftungsventils in der Entlüftungsleitung und leitet damit die Entlüftung der Druckluftversorgungsanlage ein.

Nachteilig bei allen einem solchen Grundkonzept folgenden Druckluftversorgungsanlagen --wie beispielsweise auch der in DE 102 23 405 B4 oder EP 0 978 397 B1 oder DE 10 2009 029 898 A1-- ist, dass ein Relaiskolben des Entlüftungsventils üblicherweise eine durch eine Ventilfeder zur Verfügung gestellte Schließhaltekraft benötigt, so dass immer ein Restdruck --und ein dementsprechender Vorsteuerdruck-- für den Relaiskolben des Entlüftungsventils im System vorgehalten werden muss. Die Schließhaltekraft der Ventilfeder ist beispielsweise erforderlich, um ein Fördern des Luftverdichters gegen vergleichsweise hohe Drücke möglich zu machen. Außerdem ist das Öffnungsverhalten des Entlüftungsventils für einen Restdruck zu berücksichtigen. Diese Umstände führen regelmäßig dazu, dass ein minimaler zur Darstellung eines Vorsteuerdrucks beizubehaltender Balgdruck, etwa im Bereich von einem oder einigen bar, vorgehalten werden muss, um eine grundsätzliche Entlüftungsfunktionalität der Magnetventilanordnung zur Verfügung stellen zu können. Restdrücke können durchaus im Bereich von 1 oder 2 bis 3 bar liegen, so dass in einer Auslegung der Druckluftversorgungsanlage eine untere Druckgrenze für einen Balgdruck bei 3 bar oder mehr definiert werden muss. Trotz einer solchen Auslegung können je nach Betriebsumständen teilgeschlossene Ventilquerschnitte auftreten; diese wiederum können ein deutlich reduziertes Regenerationsverhalten bei einem Lufttrockner und damit instabile Systembetriebszustände zur Folge haben.

An dieser Stelle setzt die Erfindung an, deren Aufgabe es ist, eine Vorrichtung, insbesondere eine Druckluftversorgungsanlage und ein pneumatisches System mit einer Druckluftversorgungsanlage, anzugeben, die --aufbauend auf eine Magnetventilanordnung mit einem Steuerventil und einem Entlüftungsventil-eine verbesserte Funktionalität, insbesondere eine verbesserte Entlüftungsfunktionalität zur Verfügung stellt. Insbesondere soll eine Entlüftungsfunktionalität mit vergleichsweise hoher Druckamplitude möglich sein.

Insbesondere soll die Magnetventilanordnung bei der Druckluftversorgungsanlage dennoch vergleichsweise einfach und mit schneller Funktionalität ausgelegt sein; insbesondere sollen Beeinträchtigungsmöglichkeiten der Funktionalität weitgehend vermieden bzw. reduziert sein. Insbesondere soll die Aufgabe durch eine vergleichsweise einfache Modifikation bislang bestehender Systeme lösbar sein, insbesondere durch eine vergleichsweise einfache Modifikation eines eingangs genannten schnell entlüftenden Systems sowie ggf. einer Peripherie der Druckluftversorgungsanlage, wie beispielsweise einer Pneumatikanlage oder einer Steuerelektronik.

Aufgabe der Erfindung ist es auch ein geeignetes Verfahren zum Betrieb, insbesondere Steuerung, der Druckluftversorgungsanlage und/oder der Pneumatikanlage anzugeben.

Gemäß einer Vorrichtung wird die Aufgabe durch die Erfindung mittels einer Druckluftversorgungsanlage der eingangs genannten Art gelöst, bei der erfindungsgemäß auch die Merkmale des kennzeichnenden Teils des Anspruchs 1 vorgesehen sind. Erfindungsgemäß ist vorgesehen, dass an die Steuerleitung eine druckhaltende pneumatische Einrichtung angeschlossen ist, die ausgebildet ist, den Drucksteueranschluss bei geöffnetem Entlüftungs-Ventilanschluss des Entlüftungsventils in der Entlüftungsleitung unter Steuerdruck zu halten, unabhängig von einem Druck in der Entlüftungsleitung und/oder der pneumatischen Hauptleitung. Ein Anschluss an die Steuerleitung umfasst auch einen Anschluss in der Steuerleitung. Eine druckhaltende pneumatische Einrichtung mit einem Anschluss kann an die Steuerleitung nur mit dem einen Anschluss angeschlossen sein; insofern nur einseitig angeschlossen sein, wie dies beispielsweise bei einem Druckspeicher, einem Druckreservoir oder einem Balg oder einem Kompressor der Fall sein kann. Auch kann eine zwei oder mehr Anschlüsse aufweisende druckhaltende pneumatische Einrichtung an die Steuerleitung mit den zwei Anschlüssen, ggf. auch den mehreren Anschlüssen, angeschlossen sein; insofern zweiseitig in der Steuerleitung integriert sein, wie dies beispielsweise bei einem Ventil, insbesondere einem 2/2-Ventil, der Fall sein kann. Das Ventil kann auch weitere Anschlüsse aufweisen, die nicht an die Steuerleitung angeschlossen sind, wie dies beispielsweise bei einem 3/2-Ventil der Fall sein kann.

Betreffend eine Vorrichtung wird die Aufgabe durch die Erfindung auch mittels eines pneumatischen Systems des Anspruchs 8 gelöst. Insbesondere hat sich die Erfindung bewährt bei einem pneumatischen System mit der Druckluftversorgungsanlage gemäß der Erfindung sowie einer Pneumatikanlage in Form einer Luftfederanlage, wobei die Luftfederanlage eine Galerie und wenigstens eine an die Galerie pneumatisch angeschlossene Zweigleitung mit einem Balg und/oder einem Druckspeicher sowie einer dem Balg und/oder dem Druckspeicher vorgeordneten Wegeventil aufweist.

Hinsichtlich eines Verfahrens wird die Aufgabe durch die Erfindung mit einem Verfahren des Anspruchs 9 gelöst. Das erfindungsgemäße Verfahren sieht die Schritte vor:
- Aufbauen von Steuerdruck an den Drucksteueranschluss des Entlüftungsventils,
- Öffnen des Ventilanschluss des Entlüftungsventils in der Entlüftungsleitung,
- Halten des Steuerdrucks am Drucksteueranschluss des Entlüftungsventils bei geöffnetem Ventilanschluss des Entlüftungsventils unabhängig von einem Druck in der Entlüftungsleitung und/oder der pneumatischen Hauptleitung.

Die Erfindung geht von der Überlegung aus, dass sich die eingangs genannte Magnetventilanordnung mit einem Steuerventil zur Steuerung eines Entlüftungsventils bei einer Druckluftversorgungsanlage jedenfalls grundsätzlich bewährt hat. Die Nutzung eines in einer pneumatischen Hauptleitung anliegenden Balgdrucks zur Darstellung eines Steuerdrucks an einem Drucksteueranschluss des Entlüftungsventils ist durchaus zweckmäßig und kann dennoch hinsichtlich der eingangs genannten Problematik eines Resthaltedrucks, insbesondere Restbalgdrucks, hinderlich sein. Ein insofern erforderlicher Resthaltedruck kann einschränkend wirken, wenn eine besonders effektive Druckwechseladsorption zur Regeneration eines Trockners bzw. eine hohe Federamplitude bei einer Luftfederanlage zu erreichen bzw. zu optimieren sein soll. Die Erfindung geht insbesondere von der Überlegung aus, dass eine Maßgabe hinsichtlich eines Resthaltedrucks, wie sie im Stand der Technik für die Entlüftungsfunktionalität einer Druckluftversorgungsanlage erforderlich ist, gegebenenfalls hinderlich sein kann, wenn eine besonders schnelle Entlüftungsfunktionalität zu realisieren sein soll. Gleichwohl sollte der einfache Aufbau einer Magnetventilanordnung mit einem Steuerventil zur Steuerung eines Entlüftungsventils zur Beibehaltung einer schnellen Entlüftungsfunktionalität nicht über die Maßen kompliziert werden bzw. sollte vergleichsweise einfach gehalten werden.

Ausgehend von diesen Überlegungen hat die Erfindung erkannt, dass es erfindungsgemäß möglich ist, eine an die Steuerleitung angeschlossene Druck haltende pneumatische Einrichtung zur Verfügung zu stellen, mittels der ein zur Darstellung eines Steuerdrucks aus Balgdruck entbehrlich wird. Vielmehr sieht die Erfindung erfindungsgemäß eine druckhaltende pneumatische Einrichtung vor, die ausgebildet ist, den Drucksteueranschluss bei geöffnetem Ventilanschluss des Entlüftungsventils in der Entlüftungsleitung nicht nur unter Steuerdruck zu halten sondern vor allem unabhängig von einem Druck in der Entlüftungsleitung und/oder der pneumatischen Hauptleitung unter Steuerdruck zu halten, derart, dass der Druck in der Entlüftungsleitung und/oder der pneumatischen Hauptleitung praktisch bis auf einen Umgebungsdruck absinken kann. Dieses Konzept einer druckhaltenden pneumatischen Einrichtung, die insofern unabhängig von einem Balgdruck funktioniert, hat sich bewährt sowohl hinsichtlich einer Ausbildungsmöglichkeit zur Darstellung einer vergleichsweise hohen Druckwechselamplitude als auch einer schnellen Entlüftungsfunktionalität. Zudem lässt sich eine druckhaltende pneumatische Einrichtung in der Steuerleitung zusätzlich zur Magnetventilanordnung und/oder unter Modifikation der Magnetventilanordnung, insbesondere des Steuerventils, vergleichsweise einfach und ohne übermäßig hohen Modifikationsaufwand einer bislang bekannten Magnetventilanordnung realisieren.

Bevorzugte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorzugsweise sind geeignete Druckhaltemittel bei der druckhaltenden pneumatischen Einrichtung vorgesehen, die vorzugsweise durch eine vergleichsweise einfache Modifikation der Magnetventilanordnung und/oder unter Nutzung von pneumatischen Komponenten der Peripherie der Druckluftversorgungsanlage wie beispielsweise einer Pneumatikanlage realisiert werden können. Unter Druckhaltemittel sind grundsätzlich alle einen Konstantdruck haltenden Mittel bzw. Mittel zur Realisierung eines Konstantdrucks zu verstehen. Unter Konstantdruck ist ein Druck zu verstehen ist, der unabhängig von einem Balgdruck ist, insbesondere unabhängig von einem Druck in der Entlüftungsleitung und der pneumatischen Hauptleitung ist.

Insbesondere kann das Konzept, vereinfacht gesagt, eine druckhaltende pneumatische Einrichtung mit einem Druckhaltemittel vorsehen, das zur Darstellung eines Steuerdrucks am Drucksteueranschluss des Entlüftungsventils in der Lage ist und einen Konstantdruck als Steuerdruck zur Verfügung stellen kann, der unabhängig von einem Balgdruck realisiert ist. Dazu eignen sich insbesondere pneumatische Sperrmittel zum Sperren der Steuerleitung, nachdem ein gewisser Steuerdruck aufgebaut ist und/oder pneumatische Quellen, die einer Steuerleitung vergleichsweise konstanten Druck unabhängig von einem Balgdruck zur Verfügung stellen können.

Im Rahmen einer besonders bevorzugten Weiterbildung ist die druckhaltende pneumatische Einrichtung ausgebildet, den Drucksteueranschluss bei geöffnetem Ventilanschluss des Entlüftungsventils in der Entlüftungsleitung derart unter Druck zu halten, dass ein Druck in der Entlüftungsleitung und der pneumatischen Hauptleitung variabel unter einen Resthaltedruck absinken kann. Unter einem Resthaltedruck ist insbesondere ein Restdruck zu verstehen, der durch eine Ventilfeder des Entlüftungsventils vorgegeben ist. Diese Weiterbildung ermöglicht es, insbesondere den Steuerdruck variabel einzustellen, d. h. insbesondere unabhängig von einem Balgdruck und insbesondere in einem Bereich unterhalb eines Restdrucks. Im Ergebnis kann dies im Rahmen einer weiteren bevorzugten Weiterbildung benutzt werden um eine Entlüftung der Druckluftversorgungsanlage bis auf einen Umgebungsdruck zu ermöglichen. Bevorzugt sieht eine Weiterbildung dazu vor, dass die druckhaltende pneumatische Einrichtung ausgebildet ist, den Drucksteueranschluss bei geöffnetem Ventilanschluss des Entlüftungsventils in der Entlüftungsleitung derart unter Druck zu halten, dass ein Druck in der Entlüftungsleitung und der pneumatischen Hauptleitung praktisch bis auf einen Umgebungsdruck absinken kann.

Im Rahmen einer besonders bevorzugten weiterbildenden Variante kann die druckhaltende pneumatische Einrichtung mit dem Steuerventil selbst gebildet sein. Im Rahmen der weiterbildenden Variante wurde erkannt, dass sich das Steuerventil selbst vergleichsweise einfach modifizieren lässt, insbesondere in Abweichung von einem 3/2-Wegeventil. Insbesondere können die Vorteile eines 3/2-Wegeventils als Steuerventil zugunsten einer vereinfachten mechanischen Ausführung des Steuerventils aufgegeben werden. Insbesondere kann im Rahmen der weiterbildenden Variante das Steuerventil vorzugsweise zwei Ventilanschlüsse aufweisen, die in der Steuerleitung angeschlossen sind. Bevorzugt ist das Steuerventil frei von einem Ventilanschluss zur Umgebung. Insbesondere ist das Steuerventil in Form eines 2/2-Wegeventils gebildet. Die weiterbildende Variante folgt der Erkenntnis, dass eine Entlüftung der Steuerleitung auch in die pneumatische Hauptleitung und über den Lufttrockner erfolgen kann. Die Magnetventilanordnung kann vergleichsweise einfach und schnellschaltend ausgelegt sein.

Insbesondere kann eine elektromagnetische Funktionalität und/oder ein Ansteuerungsablauf für das Steuerventil zur Bildung einer vorteilhaften druckhaltenden pneumatischen Einrichtung gemäß der Variante verbessert ausgebaut werden. Anders ausgedrückt wird das Steuerventil mit einer geeigneten elektromagnetischen Intervall-Steuerfunktionalität weitergebildet. Insbesondere hat es sich als vorteilhaft erwiesen, dass das Steuerventil elektromagnetisch intervall-steuerbar ausgebildet ist. Mit intervall-steuerbar ist vorliegend gemeint, dass ein Öffnungs- und Schließvorgang des Steuerventils,--insbesondere durch ein Steuerpuls-Paar initiiert; also z. B. eine Kombination eines Ein- und Ausschaltvorgangs für einen Strom einer Magnetspule-- zeitlich eng benachbart erfolgt; nämlich derart, dass ein ausreichender Steuerdruck am Drucksteueranschluss des Entlüftungsventils aufgebaut werden kann und unmittelbar danach der am Steueranschluss anschließende zweite Teil der Steuerleitung geschlossen werden kann. Im Rahmen einer solchen als Intervall-Steuerfunktionalität bezeichneten Ansteuerung des Steuerventils z. B. eines vorgenannten 2/2-Wegeventils lässt sich --unabhängig von einem Druck in der Entlüftungsleitung und der pneumatischen Hauptleitung-- der Drucksteueranschluss des Entlüftungsventils bei geöffnetem Ventilanschluss des Entlüftungsventils unter Steuerdruck halten.

Insbesondere sieht die weiterbildende Variante vor, dass mittels der elektromagnetischen Intervall-Steuerfunktionalität zu Beginn eines Steuerintervalls zum Aufbau des Steuerdrucks auf den Drucksteueranschluss des Entlüftungsventils in der Steuerleitung die zwei Ventilanschlüsse des Steuerventils zu öffnen sind; am Ende des Steuerintervalls sind zum Halten des Drucksteueranschlusses unter Steuerdruck die zwei Ventilanschlüsse zu schließen. Vereinfacht gesagt, wird das Steuerventil, vorzugsweise in Form eines 2/2-Wegeventils, als Magnetventil ausgebildet und mittels eines das Steuerintervall begrenzenden Steuerpuls-Paares angesteuert, derart dass das Steuerventil zu Beginn des Steuerintervalls öffnet und am Ende des Steuerintervalls schließt. Die Dauer eines Steuerintervalls sollte gerade ausreichend sein, um den Steuerdruck aufzubauen und kann bevorzugt deutlich unterhalb von 1 s liegen.

Im Rahmen weiterbildender Abwandlungen kann der Steuerdruck von einer geeigneten Konstantdruckquelle zur Verfügung gestellt werden; dieser kann beispielsweise von einer zu einem Druckspeicher oder Balg oder dergleichen Reservoir führenden Zweigleitung oder vom Reservoir selbst abgeleitet werden, beispielsweise von einem Luftverdichter, insbesondere direkt von der pneumatischen Hauptleitung bei Betrieb des Luftverdichters, zur Verfügung gestellt werden.

Im Rahmen einer ersten Abwandlung der weiterbildenden Variante kann die Steuerleitung an einen Druckspeicher angeschlossen sein, insbesondere von einer zu einem Druckspeicher führenden Speicher-Zweigleitung, vorzugsweise unmittelbar, abgezweigt sein. Ein Druckspeicher ermöglicht es, mit vergleichsweise wenig Aufwand, unabhängig von einem Druck in der Entlüftungsleitung und der pneumatischen Hauptleitung einen Steuerdruck darzustellen. Bei geöffnetem Ventilanschluss des Entlüftungsventils in der Entlüftungsleitung kann die Hauptleitung und die Entlüftungsleitung, insbesondere ein Balg mit variablem Restdruck, entlüftet werden, insbesondere bis auf einen Umgebungsdruck entlüftet werden.

Im Rahmen einer zweiten Abwandlung der weiterbildenden Variante kann die Steuerleitung an einen Balg angeschlossen sein, insbesondere von einer zu einem Balg führenden Balg-Zweigleitung, vorzugsweise unmittelbar, abgezweigt sein.

Die Speicher-Zweigleitung und/oder Balg-Zweigleitung bzw. der Druckspeicher und/oder der Balg sind bevorzugt Komponenten einer Pneumatikanlage des pneumatischen Systems. Dies hat den Vorteil, dass eine Modifikation eines bestehenden pneumatischen Leitungssystems vergleichsweise einfach realisierbar bzw. unter Nutzung bisheriger pneumatischer Leitungen umgesetzt werden kann. Insbesondere ist vorgesehen, dass die Steuerleitung an einen Druckspeicher angeschlossen ist und frei von einem Anschluss zur pneumatischen Hauptleitung ist.

Im Rahmen einer dritten Abwandlung hat es sich als vorteilhaft erwiesen, dass die Steuerleitung, vorzugsweise schaltbar, an einen Luftverdichter und/oder Balg und/oder Druckspeicher angeschlossen ist. Insbesondere kann die Steuerleitung unmittelbar am Luftverdichter und/oder an einer am Luftverdichter angeschlossenen Zweigleitung, vorzugsweise unmittelbar, angeschlossen sein. Analog gilt dies für den Anschluss an den Balg und/oder den Druckspeicher. Die Steuerleitung kann auch, vorzugsweise unmittelbar, von der pneumatischen Hauptleitung abzweigen. Im Rahmen der dritten Abwandlung wurde erkannt, dass über die Hauptleitung, insbesondere die Druckamplitude eines Luftverdichters, d. h. aus der Druckluftzuführung genutzt werden kann, um einen definierten Steuerdruck aufzubauen. Hier ergeben sich zusätzlich verschiedene vorteilhafte Möglichkeiten, den Steuerdruck situationsabhängig zu definieren, beispielsweise über eine vorbestimmte Festlegung der Intervalllänge des Steuerintervalls und/oder der Verdichtertätigkeit. Bevorzugt kann die pneumatische Hauptleitung durch Öffnen eines Wegeventils, insbesondere eines dem Druckspeicher und/oder Balg und/oder Verdichter vorgeordneten Wegeventils geflutet werden mit einem Reservoirdruck. Eine zusätzliche Reservoir-Zweigleitung kann vorteilhaft entfallen.

Die vorgenannten drei Abwandlungen und deren Ausgestaltungen können allein oder in Kombination realisiert werden.

Das Verfahren gemäß einem abgewandelten Konzept sieht insbesondere die Schritte vor:
- Anschließen einer druckhaltenden pneumatischen Einrichtung in Form einer geeigneten Konstantdruckquelle an die Steuerleitung,
- Aufbauen von Steuerdruck an den Drucksteueranschluss des Entlüftungsventils durch Öffnen des Steuerventils in Form eines 2/2-Wegeventils,
- Halten des Steuerdrucks am Drucksteueranschluss des Entlüftungsventils durch Schließen des Steuerventils in Form eines 2/2-Wegeventils, wobei das genannte Öffnen und Schließen des Steuerventils im Rahmen eines elektromagnetischen Intervallsteuern des Steuerventils erfolgt.

Insbesondere zum Entlüften der Druckluftversorgungsanlage ist vorgesehen: Öffnen des Entlüftungs-Ventilanschlusses des Entlüftungsventils in der Entlüftungsleitung. Das Halten des Steuerdrucks erfolgt so bei geöffnetem Entlüftungs-Ventilanschluss des Entlüftungsventils unabhängig von einem Druck in der Entlüftungsleitung und/oder der pneumatischen Hauptleitung.

Das weiterbildende Konzept hat erkannt, dass es unter Nutzung einer elektromagnetischen Intervall-Steuerfunktionalität möglich ist, ein vergleichsweise einfach ausgelegtes Steuerventil --insbesondere ein 2/2-Wegeventil als Magnetventil-- in geeigneter, insbesondere bedarfsabhängiger Weise variabel zu steuern, d. h. gemäß dem Konzept der Weiterbildung unabhängig von einem Druck in der Entlüftungsleitung und/oder der pneumatischen Hauptleitung zu steuern. Das abgewandelte Konzept ist nicht beschränkt auf einen Entlüftungsvorgang; grundsätzlich kann bei jedem erforderlichen Steuervorgang das Steuerventil unter Nutzung einer elektromagnetischen Intervall-Steuerfunktionalität angesteuert werden; z. B. auch im Rahmen einer Befüllfunktion eines Druckhahns oder eines Reifens oder im Rahmen einer Hebefunktion für die Pneumatikanlage.

Im Rahmen einer ersten bevorzugten Intervall-Steuerfunktionalität ist vorgesehen, dass --im Rahmen eines Entlüftungsprozesses-- ein Restdruck in der Pneumatikhauptleitung, insbesondere in einem Balg und/oder einem Druckspeicher oder sonstigem Reservoir vermieden wird. Anders ausgedrückt kann im Rahmen eines Entlüftungsprozesses ein Balg bis auf einen Umgebungsdruck oder nahezu bis Umgebungsdruck entlüftet werden. Dazu kann ein dem Balg und/oder dem Druckspeicher vorgeordnetes Wegeventil ausreichend lange geöffnet sein. Es kann auch ein Druck in einem Balg und/oder dem Druckspeicher gemessen werden und ein dem Balg und/oder dem Druckspeicher vorgeordnetes Wegeventil abhängig vom Druckmesswert solange geöffnet bleiben, bis der gewünschte Umgebungsdruck oder aber ein geeigneter über dem Umgebungsdruck liegender Restdruck im Balg oder Druckspeicher vorliegt.

Insbesondere ist vorgesehen, das intervall-steuerbare Steuerventil mit einem ersten elektromagnetischen Steuerintervall vor oder bei Beginn des Entlüftungsprozesses anzusteuern und mit einem zweiten elektromagnetischen Steuerintervall bei oder nach dem Ende des Entlüftungsprozesses anzusteuern. Besonders bevorzugt ist ein erstes elektromagnetisches Steuerintervall vor oder nach dem Öffnen eines dem Balg und/oder dem Druckspeicher vorgeordneten Wegeventils.

Insbesondere kann ein erstes elektro-magnetisches Intervallsteuern des Steuerventils vorgenommen werden vor, bei oder nach dem Öffnen eines dem Balg und/oder dem Druckspeicher vorgeordneten Wegeventils. Insbesondere kann ein zweites elektro-magnetisches Intervallsteuern des Steuerventils vorgenommen werden bei oder nach dem Schließen eines dem Balg und/oder dem Druckspeicher vorgeordneten Wegeventils.

In einer Abwandlung kann das Verfahren grundsätzlich auch genutzt werden, um einen Restdruck im Balg zu halten. Dazu kann in abgewandelter Weise das Steuerventil mit einem elektromagnetischen Steuerintervall bei Beginn einem Entlüftungsprozesses angesteuert werden; mit anderen Worten kann innerhalb eines elektromagnetischen Steuerintervalls ein Entlüftungsprozess begonnen und abgeschlossen werden.

Insbesondere hat es sich als vorteilhaft erwiesen, dass ein zweites elektromagnetisches Intervallsteuern des Steuerventils vorgenommen wird zu einem Zeitpunkt, der abhängig von einem Betrag eines Drucks im Balg ist. Insbesondere kann der Zeitpunkt --vorzugsweise mittels Prüfen eines gemessenen Druckwertes-- derart gewählt werden, dass der Druck im Balg einem vorgegebenen Restdruck oder Umgebungsdruck entspricht.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und·beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt im Einzelnen in:

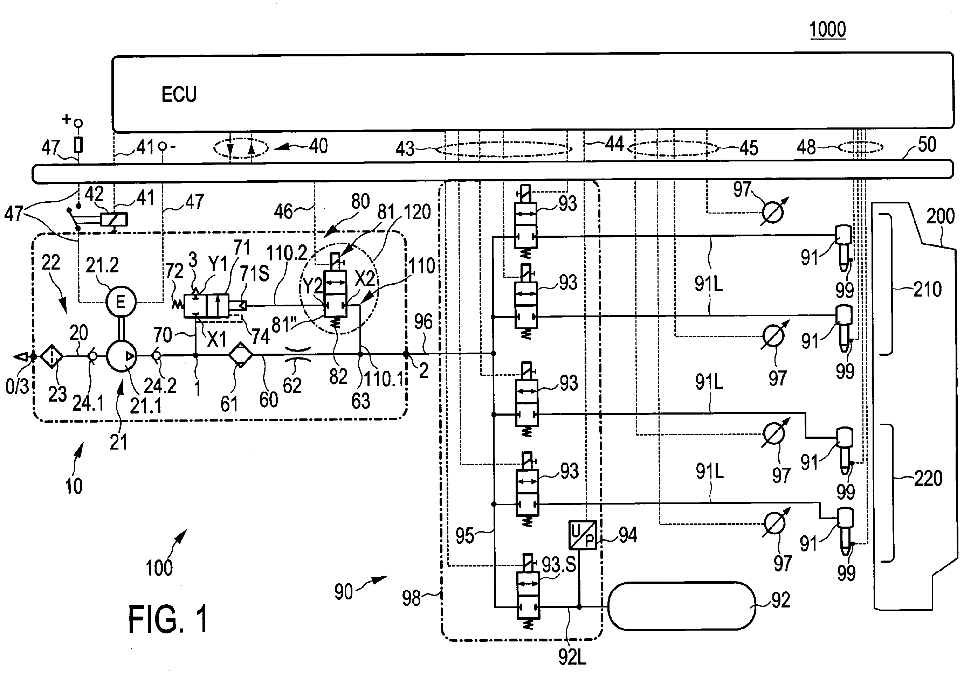

Fig. 1 eine bevorzugte Ausführungsform eines pneumatischen Systems mit einer Druckluftversorgungsanlage und einer Pneumatikanlage, wobei eine Magnetventilanordnung mit einem Steuerventil zur Steuerung eines Entlüftungsventils vorgesehen ist und eine druckhaltende pneumatische Einrichtung mittels einem modifizierten Steuerventil in Form eines 2/2-Wegeventils mit einer elektromagnetischen Intervall-Steuerfunktionalität derart gebildet ist, dass das 2/2-Wegeventil zum Aufbau des Steuerdrucks und anschließenden Halten des Steuerdrucks kurzzeitig zu öffnen und anschließend zu schließen ist;

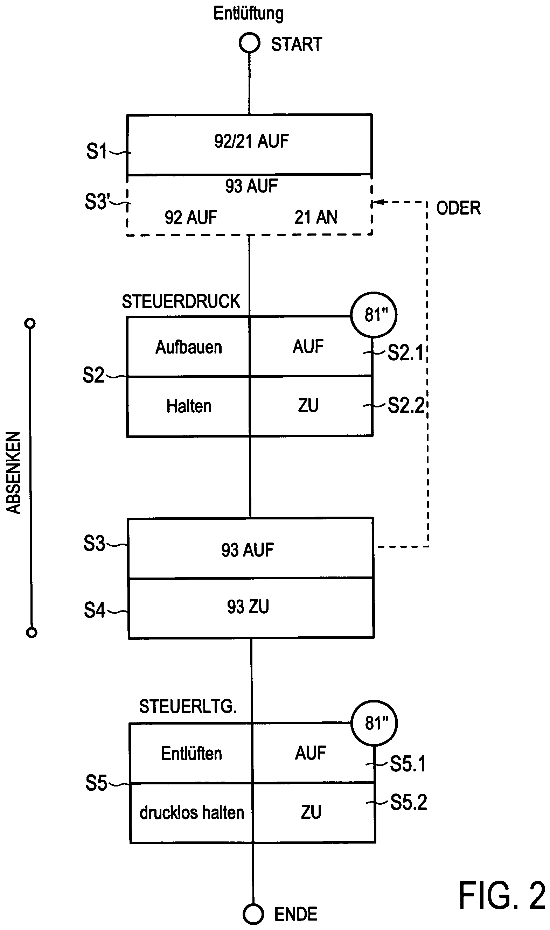

Fig. 2 ein Ablaufdiagramm zur Darstellung einer bevorzugten Intervall-Steuerfunktionalität;

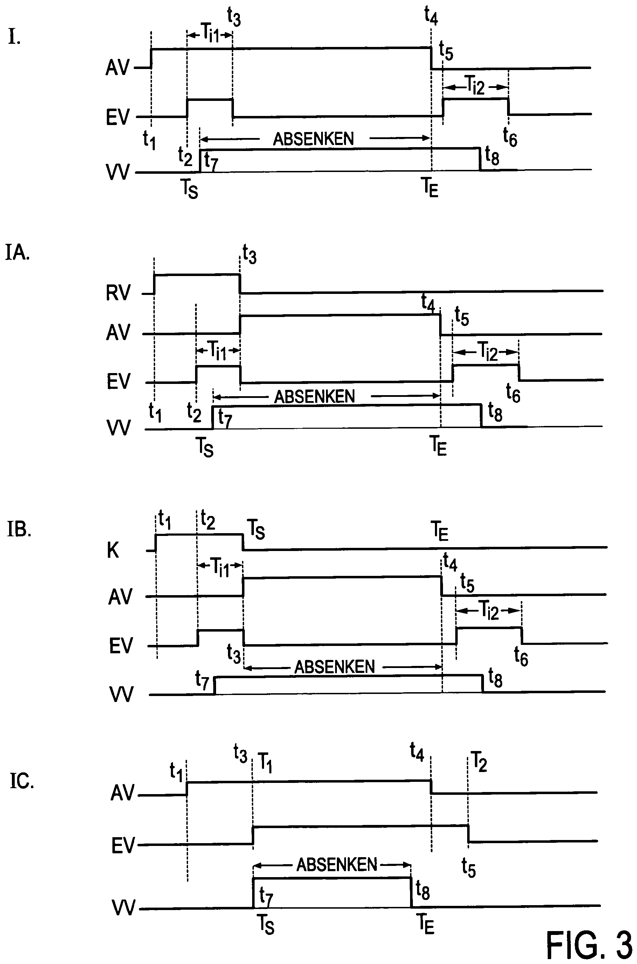

Fig. 3 eine Abfolge verschiedener Schaltimpulse für ein Balgventil (AV; Wegeventil 93), ein Entlüftungsventil (VV; Entlüftungsventil 71) und ein Steuerventil (EV, Steuerventil 81) unter Nutzung einer bevorzugten Intervall-Steuerfunktionalität für das Steuerventil zur Realisierung einer Entlüftungsfunktionalität in unterschiedlichen Abwandlungen; nämlich
   in I für ein Senken mittels 2/2 Steuerventil 81 ohne Restdruck,
   in IA für ein Senken mittels 2/2 Steuerventil 81 ohne Restdruck (Pilotdruck aus Druckspeicher 92),
   in IB für ein Senken mittels 2/2 Steuerventil 81 ohne Restdruck (Pilotdruck aus Verdichter 21),
   in IC für ein Senken mittels 2/2 Steuerventil 81 mit Restdruck.

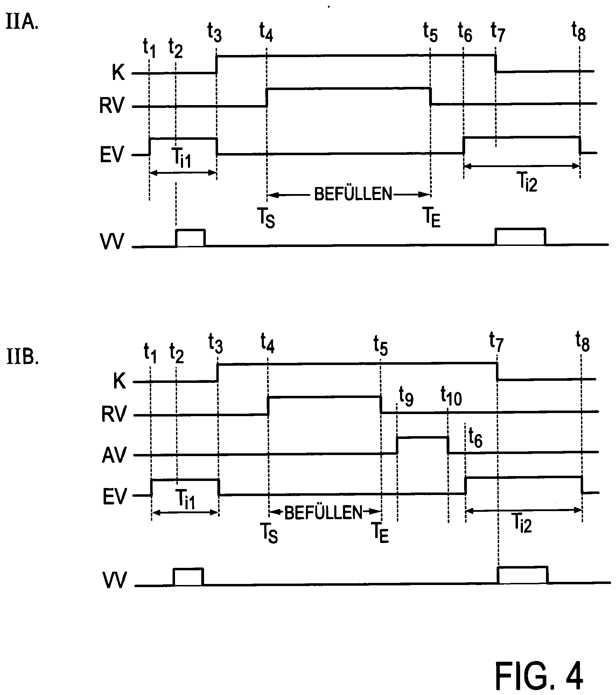

Fig. 4 eine Abfolge verschiedener Schaltimpulse zum Befüllen eines Druckspeichers einer Pneumatikanlage, d. h. für einen Kompressor (K bei einem Verdichter 21) und/oder ein Speicherventil (RV; Wegeventil 93.S) sowie ein Balgventil (AV; Wegeventil 93) und ein Steuerventil (EV; Steuerventil 81) und ein Entlüftungsventil (VV; Entlüftungsventil 71); nämlich
   in IIA für ein Befüllen des Druckspeichers 92, insbesondere mit Druckablassen in die Atmosphäre am Ende des Befüllens,
   in IIB für ein Befüllen des Druckspeichers 92 mit Druckablassen am Ende des Befüllens, wobei die Galerie 95 erst in einen Balg 91 entlüftet und dann in die Atmosphäre;

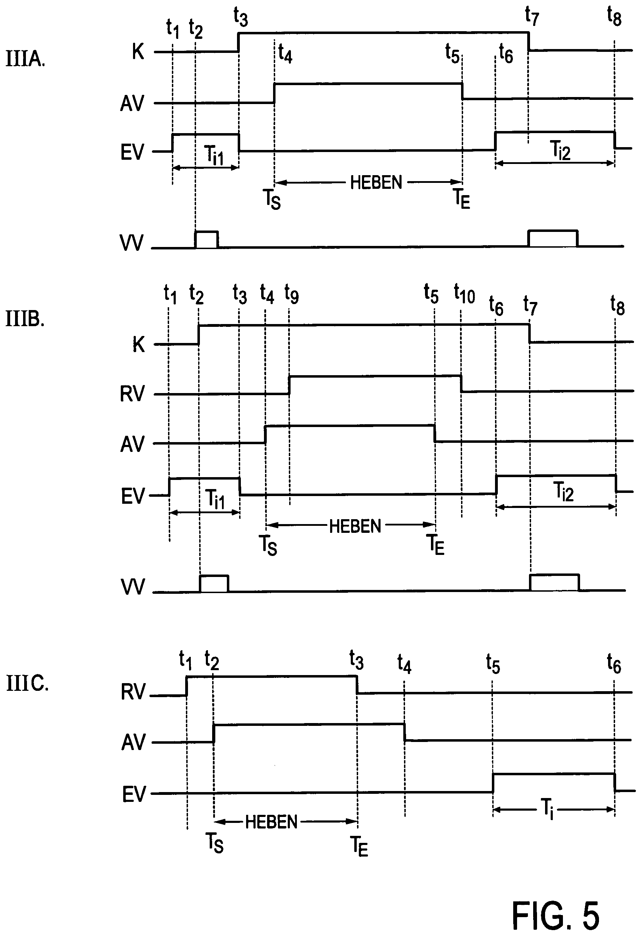

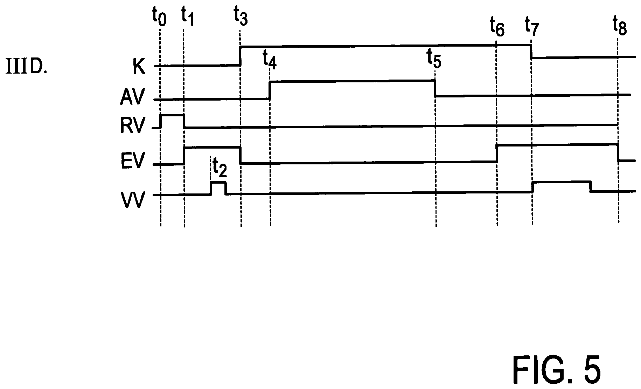

Fig. 5 eine Abfolge verschiedener Schaltimpulse für einen Kompressor (K bei einem Verdichter 21), ein Balgventil (AV; Wegeventil 93), einen Druckspeicher (RV; Wegeventil 93.S) und ein Steuerventil (EV; Steuerventil 81) und ein Entlüftungsventil (VV; Entlüftungsventil 71) zur Realisierung einer Befüllfunktion der Luftfederanlage; nämlich
   in IIIA für ein Anheben mittels Verdichter 21 (oder auch für Reifenfüllfunktion),
   in IIIB für ein Anheben mittels Verdichter 21 und Druckspeicher 92,
   in IIIC für ein Anheben mittels Balg 91,
   in IIID für ein Fluten der Galerie 95 (am Beispiel Heben mit Kompressor) aus einem Reservoir zum sicheren Öffnen des Entlüftungsventils 71 gemäß Kennlinie VV.

Fig. 1 zeigt ein pneumatisches System 100 mit einer Druckluftversorgungsanlage 10 und einer Pneumatikanlage 90 für ein symbolisch gezeigtes Fahrzeug 1000. Das pneumatische System 100 ist zur Ansteuerung über eine Steckverbindung 50 und einen Datenbus 40 an eine ECU als elektronische Fahrzeugsteuerung angebunden, wobei diverse mit 41, 42, 43, 44, 45, 46, 47, 48 bezeichnete und dünn gezeichnete elektrische Steuer- und Sensorleitungen . Stromleitungen für die Druckluftversorgungsanlage 10, die Pneumatikanlage 90 sowie eine Sensorik und Relaisschaltung vorgesehen sind.

Konkret ist die ECU zur Überwachung und Ansteuerung des pneumatischen Systems 100 über den Datenbus 40 sowie die vorgenannten elektrischen Steuer- und Sensorleitungen und eine Steckverbindung 50 angebunden; zu den elektrischen Steuerleitungen zählen erste elektrische Steuerleitungen 43 zur Beaufschlagung von Magnetspulen der Magnet-Wegeventile 93 in der Pneumatikanlage 90 sowie eine zweite elektrische Steuerleitung 46 zur Beaufschlagung der Magnetspule eines Steuerventils 81 in Form eines Magnet-Wegeventils einer Magnetventilanordnung 80 in der Druckluftversorgungsanlage 10. Die ersten elektrischen Steuerleitungen 43 dienen der steuernden Bestromung der als Magnetventile gebildeten Balg- und Speicherventile in Form von Wegeventilen 93, 93.S. Die zweite elektrische Steuerleitung 46 dient der steuernden Bestromung des als Magnetventil gebildeten Steuerventils 81.

Darüber hinaus sind erste elektrische Sensorleitungen 45 zu Höhensensoren 97 in der Pneumatikanlage 90 und eine zweite elektrische Sensorleitung 44 zu einem Drucksensor 94 in einer Speicher-Zweigleitung 92L zu einem Druckspeicher 92 vorgesehen. Die ersten elektrischen Sensorleitungen 45 sind dazu an die Höhensensoren 97 angeschlossen. Die zweite elektrische Sensorleitung 44 ist an den Drucksensor 94 angeschlossen, der in der Speicher-Zweigleitung 92L einen Druck des Druckspeichers 92 misst. Zusätzlich können auch dritte Sensorleitungen 48 zu Balg-Druck-Sensoren 99 vorgesehen sein.

Außerdem sind auch Stromleitungen 47 für sonstige elektromagnetische Komponenten, wie die Stromleitung 47 mit einem Relais 42 zum Betrieb des Elektromotors 21.2 einer Verdichtereinheit 21 und eine elektrische Steuerleitung 41 zum Relais 42 vorgesehen. Im vorliegenden Fall ist der Elektromotor 21.2 über die als elektrische Schaltleitung dienende Stromleitung 47 und die elektrische Steuerleitung 41 und das steuerbare Relais 42 ansteuerbar.

Bezug nehmend auf Fig. 1 zeigt diese eine Druckluftversorgungsanlage 10 zum Betreiben der Pneumatikanlage 90; vorliegend eine Luftfederanlage eines mit Frontachse 210 und Rückachse 220 symbolisch dargestellten Fahrzeugaufbaus 200 eines Fahrzeugs 1000. Die Druckluftversorgungsanlage 10 hat eine Druckluftzuführung 1 und einen Druckluftanschluss 2, wobei der Druckluftzuführung 1, Druckluft über eine Luftzuführung 22 zuführbar ist. Die Druckluft kann in Befüllrichtung zwischen der Druckluftzuführung 1 und dem Druckluftanschluss 2 über eine pneumatische Hauptleitung 60 geführt werden und der Pneumatikanlage 90 zugeführt werden. In der Luftzuführung 22 ist dazu in einer Luftzuführungsleitung 20 ein zur Ansaugung von Luft vorgesehener Luftanschluss 0, ein Filter 23 und eine Verdichtereinheit 21 angeordnet. Die Verdichtereinheit 21 ist vorliegend zwischen einem ersten und zweiten Rückschlagventil 24.1, 24.2 angeordnet, wobei in der Verdichtereinheit 21 ein Kompressor 21.1 über einen Elektromotor 21.2 antreibbar ist.

In der Pneumatikhauptleitung 60 sind ein Lufttrockner 61 und eine Drossel 62 angeordnet. Von der pneumatischen Hauptleitung 60 geht an der Druckluftzuführung 1 eine Entlüftungsleitung 70 ab, die sich über ein Entlüftungsventil 71 zu einem Entlüftungsanschluss 3 fortsetzt. Vorliegend ist der Entlüftungsanschluss 3 direkt mit einem entlüftungsseitigen zweiten Entlüftungs-Ventilanschluss Y1 des Entlüftungsventils 71 gebildet. Der dem zweiten Entlüftungs-Ventilanschluss Y1 des Entlüftungsventils 71 gegenüberliegende druckseitige erste Entlüftungs-Ventilanschluss X1 schließt an die Entlüftungsleitung 70 an. Das Entlüftungsventil 71 ist vorliegend als ein 2/2-Relaiswegeventil gebildet, das einen Drucksteueranschluss 71 S aufweist. Das Entlüftungsventil weist einen ersten Entlüftungs-Ventilanschluss X1 auf, der über die Entlüftungsleitung 70 an die Druckluftzuführung 1 angeschlossen ist. Der zweite Entlüftungs-Ventilanschluss Y1 ist als Entlüftungsanschluss 3 gebildet oder in einer Abwandlung an einen Entlüftungsanschluss 3 angeschlossen.

Außerdem ist ein, insbesondere Relais-, Druckbegrenzer 74 am Entlüftungsventil 71 derart vorgesehen, dass unter Abgreifen eines Drucks in der Entlüftungsleitung 70 über den Druckbegrenzer 74 der Druck zum Öffnen des Entlüftungsventils 71 beschränkt ist. Auf diese Weise kann selbst bei einem vergleichsweise hohen Betriebsdruck eine gewisse Variabilität bzw. Toleranz hinsichtlich einer Druckbegrenzung erreicht werden. Vorteilhaft ist vor allem ein stromgesteuerter Druckbegrenzer 74, der vorliegend dadurch realisiert ist, dass der Schaltpunkt des Entlüftungsventils 71 abhängig von der Stromstärke eines Steuerstroms für das Steuerventil 81 variabel einstellbar ist. D. h. die Stromstärke im Magnetteil (Spule) im Steuerventil 81 bestimmt den Schaltpunkt eines Pneumatikteils (Entlüftungsventil 71 als Relaisventil). Je nach Fahrzeugsituation, Temperatur des Systems oder sonstiger druckrelevanter Systembelange kann der Schaltpunkt des Pneumatikteils, also des als Relaisventil gebildeten Entlüftungsventils 71, mit der wirkenden Stromstärke variabel eingestellt werden. Durch den stromgesteuerten Druckbegrenzer 74 ist sichergestellt, dass der Galeriedruck den statischen Öffnungsdruck eines als Magnetventil ausgebildeten Balgventils in Form eines Wegeventils 93 (auch Niveauregelventil genannt) und einen Innendruck eines Balgs 91 nicht übersteigt. Eine Druckmessung kann, außer in der Galerie 95, wie vorliegend an einem Druckspeicher 92 --nämlich wie vorliegend über den Drucksensor 94-- direkt am Druckspeicher 92 oder über eine an der Speicher-Zweigleitung 92L angeschlossene Leitung erfolgen.

Im vorliegenden Fall ist eine Magnetventilanordnung 80 mit dem Steuerventil 81 als Magnetventil zur Steuerung eines Entlüftungsventils 71 als Relaisventil vorgesehen. Das Steuerventil 81 ist dabei mit einem ersten Ventilanschluss X2 und einem zweiten Steuer-Ventilanschluss Y2 in einer pneumatischen Steuerleitung 110 angeschlossen. Der erste Steuer-Ventilanschluss X2 ist über einen ersten Teil 110.1 der pneumatischen Steuerleitung 110 an den Zweiganschluss 63 der pneumatischen Hauptleitung 60 angeschlossen. Der zweite Steuer-Ventilanschluss Y2 ist an den Drucksteueranschluss 71 S des Entlüftungsventils 71 über einen zweiten Teil 110.2 der pneumatischen Steuerleitung 110 angeschlossen.

Die Pneumatikanlage 90 weist in einem Ventilblock 98 angeordnete, vorliegend fünf Niveauregelventile auf, die allesamt als Balg- oder Speicherventil in Form von Wegeventilen 93, 93.S, nämlich hier in Form eines Magnet-Wegeventils gebildet sind; nämlich als ein 2/2-Magnet-Wegeventil. Im Ventilblock 98 sind die als Magnet-Wegeventile 93, 93.S ausgebildeten Balg- oder Speicherventile über eine Galerie 95 miteinander verbunden, wobei die Galerie 95 über eine weitere Pneumatikleitung 96 an die pneumatische Hauptleitung 60 über den Druckluftanschluss 2 angebunden ist. Die Bälge 91 bzw. der Druckspeicher 92 ist über Balg-Zweigleitungen 91 L bzw. eine Druckspeicherleitung 92L an die als Wegeventile 93, 93.S ausgebildeten Balg- oder Speicherventile angeschlossen. Die als Wegeventile 93, 93.S ausgebildeten Balg- oder Speicherventile sind den Bälgen 91 bzw. dem Druckspeicher 92 vorgeschaltet sodass diese gegen die Galerie 95 absperren oder zur Galerie 95 öffnen können. Einem Balg 91 ist jeweils ein Höhensensor 97 zugeordnet, dessen Daten über eine Sensorleitung 45 und die Steckverbindung 50 bzw. den Datenbus 40 insbesondere an die ECU weitergebbar sind.

Zum Betrieb der Pneumatikanlage 90 lassen sich -- je nach gemessenem Höhenniveau-- die Luftfedern bildenden Bälge 91 aus der Druckluftversorgungsanlage 10 mit Druckluft über den Druckluftanschluss 2 befüllen; dies dient der Niveauanhebung des Fahrzeugaufbaus 200. Umgekehrt lassen sich die Luftbälge 91 über den Druckluftanschluss 2 in Gegenrichtung entlüften zu einem Entlüftungsanschluss 3, so dass sich das Niveau des Fahrzeugsaufbaus 200 unter Entweichen von Druckluft aus den Bälgen 91 senkt. Zum Befüllen der Pneumatikanlage 90 über den Druckluftanschluss 2 befindet sich das Entlüftungsventil 71 in dem in Fig. 1 gezeigten stromlos geschlossenen Zustand gegenüber dem Entlüftungsanschluss 3. Ebenso ist der erste und zweite Steuer-Ventilanschluss X2, Y2 pneumatisch getrennt, d. h. der erste Teil 110.1 der pneumatischen Steuerleitung 110 gegen den zweiten Teil 110.2 der pneumatischen Steuerleitung 110 geschlossen; dies hat die unangesteuert geschlossene Stellung des Entlüftungsventils 71 zur Folge.

Zum Entlüften der Pneumatikanlage 90 wird eine geeignete Bestromung der Magnetspule des Steuerventils 81 mittels einem über die elektrische Steuerleitung 46 geführten Stromsignal vorgenommen; als Folge wird die Magnetspule des Steuerventils 81 bestromt und gegen den Federdruck der Steuer-Ventilfeder 82 geöffnet. Damit wird die pneumatische Steuerleitung 110 über das Steuerventil 81 geöffnet, d. h. der erste Teil 110.1 der pneumatischen Steuerleitung 110 wird mit dem zweiten Teil 110.2 der pneumatischen Steuerleitung 110 zum Drucksteueranschluss 71 S geöffnet. Ein in der pneumatischen Steuerleitung 110 anliegender Steuerdruck wird am Drucksteueranschluss 71 S aufgebaut und wirkt gegen die Kraft der Entlüftungs-Ventilfeder 72 des Entlüftungsventils 71 sodass schließlich der erste Entlüftungs-Ventilanschluss X1 zum zweiten Entlüftungs-Ventilanschluss Y1 des Entlüftungsventils 71 geöffnet wird; also die Entlüftungsleitung 70 und ein Ausgang des Lufttrockners 61 zum Entlüftungsanschluss 3 geöffnet wird. Bei derart geöffneten Ventilanschlüssen X1, Y1 des Entlüftungsventils 71 in der Entlüftungsleitung 70 wird vorliegend der Drucksteueranschluss 71 S unter Steuerdruck gehalten, bereits aufgrund des in den Bälgen 91 vorhandenen Drucks, der bei geöffneten Niveauregelventil, d. h. Balg- oder Speicherventil in Form eines Wegeventils 93, 93.S, in der pneumatischen Hauptleitung 60 anliegt und damit als Steuerdruck in der pneumatischen Steuerleitung 110 zur Verfügung steht.

Darüber hinaus ist gemäß dem Konzept der vorliegenden Erfindung in den im weiteren erläuterten Ausführungsformen vorgesehen, dass bei geöffneten Ventilanschlüssen X1, Y1 des Entlüftungsventils in der Entlüftungsleitung 70 der Drucksteueranschluss 71 S unter Steuerdruck gehalten wird; dies unabhängig von einem Druck in der Entlüftungsleitung 70 und der pneumatischen Hauptleitung 60. Insbesondere kann mittels einer im Einzelnen in Bezug auf Fig. 1 erläuterten druckhaltenden pneumatischen Einrichtung 120 der Steuerdruck gehalten werden, obwohl ein Druck in der Entlüftungsleitung und der pneumatischen Hauptleitung 60 unter einen Resthaltedruck, d. h. einen durch die Entlüftungs-Ventilfeder 72 des Entlüftungsventils 71 vorgegebenen Druck absinken kann. Dazu ist vorliegend der erforderliche Steuerdruck in der pneumatischen Steuerleitung 110 variabel wählbar, insbesondere variabel einstellbar über die Entlüftungs-Ventilfeder 72 des Entlüftungsventils 71. So ist gemäß allen im Folgenden erläuterten Ausführungsformen gewährleistet, dass der Druck in der Entlüftungsleitung 70 und der pneumatischen Hauptleitung 60 praktisch bis auf einen Umgebungsdruck absinken kann, sodass die Bälge 91 bis auf Umgebungsdruck entlüftet werden können.

Dazu sieht die in Fig. 1 gezeigte Ausführungsform vor, dass das Steuerventil 81 modifiziert wird in Form eines 2/2-Wegeventils, das in Fig. 1 gezeigt ist und dessen Betrieb gemäß Fig. 2 näher beschrieben ist.

Fig. 1 zeigt im Rahmen einer besonders bevorzugten Ausführungsform zur Bildung einer druckhaltenden pneumatischen Einrichtung 120 ein Steuerventil 81, das vorliegend als 2/2 Wegeventil ausgeführt ist. Zum Entlüften der Bälge 91 wird das 2/2 Magnet-Wegeventil durch Bestromung der Magnetspule für eine bestimme Zeitdauer geöffnet und dann durch Beenden der Bestromung wieder geschlossen; d. h. das Steuerventil 81 wird mittels eines ein Steuerintervall begrenzenden Steuerpuls-Paares angesteuert, beispielsweise durch einen Doppelpuls über die elektrische Steuerleitung 46 für ein Steuerintervall einer bestimmen Intervall-Zeitdauer, die ausreichend ist um einen Steuerdruck im zweiten Teil 110.2 der pneumatischen Steuerleitung 110 am Drucksteueranschluss 71 S aufzubauen, geöffnet. Da das Steuerventil 81 nur während des Steuerintervall geöffnet ist und danach wieder geschlossen ist, kann der Steuerdruck im Vorsteuerkanal der pneumatischen Steuerleitung 110, d. h. im zweiten Teil 110.2 der pneumatischen Steuerleitung 110 auf dem Niveau des Anfangsdrucks gehalten werden. Der Relaiskolben des Entlüftungsventils 71 bleibt dann gegen den Federdruck der Entlüftungs-Ventilfeder 72 des Entlüftungsventils 71 geöffnet.

Zum Beenden des Entlüftungsvorgangs werden zunächst die als Wegeventile 93 gebildeten Balgventile geschlossen. Dadurch sinkt der Druck im Trockner 61 auf Umgebungsdruck, d. h. Atmosphärendruck ab. Das 2/2-Wegeventil als Steuerventil 81 wird dann geöffnet; vorzugsweise ebenfalls nur für eine bestimmte Intervall-Zeitdauer. D. h. auch für den Entlüftungsvorgang wird das Steuerventil 81 in Form des 2/2 Wegeventils durch ein Steuerintervall begrenzendes Steuerpuls-Paar, beispielsweise einen Doppelpuls über die elektrische Steuerleitung 46 für eine bestimmte Intervall-Zeitdauer geöffnet. Der Druck im Vorsteuerkanal, d. h. in der pneumatischen Steuerleitung 110 baut sich durch das relativ große Lufttrocknervolumen des Lufttrockners 61 ab und die Entlüftungs-Ventilfeder 72 kann den Relaiskolben des Entlüftungsventils 71 gegen Umgebungsdruck schließen während des Öffnungszustands des 2/2-Wegeventils im Steuerintervall. Das Steuerintervall zum Beenden des Entlüftungsvorgangs und Umsetzen eines beispielsweise unbetätigten Zustands der Lufttrockneranlage 10 oder für einen Befüllvorgang wird eingeleitet durch erneutes Schließen des 2/2-Wegeventils am Ende der Intervall-Zeitdauer. Dadurch ist die pneumatische Steuerleitung 110 gegen die pneumatische Hauptleitung 60 geschlossen; d. h. der erste Teil 110.1 der pneumatischen Steuerleitung 110 ist vom zweiten Teil 110.2 pneumatisch getrennt im stromlos geschlossenen Zustand des Steuerventils 81 in Form des 2/2 Wegeventils.

Die vorliegende, in Fig. 1 gezeigte Ausführungsform ist nicht beschränkt auf die gezeigte Leitungsführung in der Pneumatikanlage zur pneumatischen Steuerleitung 110. Vielmehr kann auch eine Leitungsführung --insbesondere zwischen dem Druckspeicher 92 und der pneumatischen Steuerleitung 110, also mit einem dritten Teil der Steuerleitung zwischen der Druckspeicherleitung 92L und der pneumatischen Steuerleitung 110-- vorgesehen sein, wobei die nicht an der pneumatischen Hauptleitung 60 angeschlossen sein muss.

Fig. 2 zeigt schematisch den grundsätzlichen Verlauf eines Entlüftungsvorgangs für eine Druckluftversorgungsanlage 10 der Fig. 1 mittels eines Steuerventils 81 in Form eines 2/2 Wegeventils. Zunächst kann in einem ersten Schritt S1 der Verdichter 21 betätigt werden und der Lufttrockner 61 und die pneumatische Steuerleitung 110 pneumatisch aufgeladen werden. Zur Einleitung eines Entlüftungsvorgangs kann in dem ersten Schritt S1 auch sichergestellt werden, dass der Druckspeicher 92 einen ausreichenden Systemdruck aufweist, der zur Bereitstellung eines Steuerdrucks in der pneumatischen Steuerleitung 110 bzw. am Drucksteueranschluss 71 des Entlüftungsventils 71 ausreicht. Dazu kann gegebenenfalls der Druckspeicher 92 durch Betätigen des Verdichters 21 aufgeladen werden. Dazu wird das dem Druckspeicher 92 vorgeschaltete Speicherventil in Form eines Wegeventils 93.S geöffnet; das Wegeventil 93.S nimmt den Zustand AUF ein.

Die Entlüftungsphase wird dann eingeleitet durch einen elektromagnetischen Intervallsteuerschritt S2 an das Steuerventil 81 unter Aufbauen --S2.1; das Steuerventil 81 und ggf. das Wegeventil 93.S nimmt den Zustand AUF ein-- und Halten --S2.2; das Steuerventil 81 und ggf. das Wegeventil 93.S nimmt den Zustand ZU ein-- eines Steuerdrucks auch im zweiten Teil 110.2 der pneumatischen Steuerleitung 110 am Drucksteueranschluss 71 S. Dazu wird in einem Schritt S2.1 intervallbeginnend und zum Aufbau des Steuerdrucks am Drucksteueranschluss 71 S der erste und zweite Steuer-Ventilanschluss X2, Y2 des Steuerventils 81 geöffnet, d. h. pneumatisch miteinander verbunden; nämlich mittels eines ersten Pulses eines elektromagnetischen Doppelpulses an die Magnetspule des Steuerventils 81. Nach Ablauf einer vorbestimmten Intervall-Zeitdauer wird intervallendend zum Halten des Drucksteueranschluss 71 S unter Steuerdruck die Bestromung des Steuerventils 81 aufgehoben; nämlich mittels eines zweiten Pulses eines elektromagnetischen Doppelpulses. Folglich fällt das Steuerventil 81 in den unbestromten in Fig. 1 gezeigten Zustand zurück und der erste und zweite Steuer-Ventilanschluss X2, Y2 werden getrennt; d. h. im Schritt S2.2 ist das Steuerventil 81 im geschlossenen Zustand.

Der Relaiskolben des Entlüftungsventils 71 öffnet und durch Öffnen der als Balgventile dienenden Wegeventile 93 im Schritt S3 kann der Entlüftungsvorgang eingeleitet werden --S3; das Wegeventil 93 nimmt den Zustand AUF ein--. Der Entlüftungsvorgang wird in einem Schritt S4 durch Schließen der als Balgventile dienenden Wegeventile 93 beendet --S4; das Wegeventil 93 nimmt den Zustand ZU ein--.

In einer in Fig. 2 ebenfalls --gestrichelt-- angezeigten abgewandelten Verfahrensführung kann der Schritt S3 als Schritt S3'auch vor dem Schritt S2 ausgeführt werden. In dem Fall sind die als Balgventile dienenden Wegeventile 93 bereits offen, bevor die Intervall-Steuerfunktionalität des Steuerventils 81 des Schrittes S2 ausgeführt wird --S3'; das Wegeventil 93 nimmt den Zustand AUF ein--. In dem Fall wird der Steuerdruck ganz oder teilweise mit Balgdruck aufgebaut; es wird der Steuerdruck ggf. zusätzlich sichergestellt --unabhängig von einem Druck in der Entlüftungsleitung 70 und/oder der pneumatischen Hauptleitung 60-- durch Zuschalten entweder des Druckspeichers 92 oder durch kurzzeitiges Anschalten des Verdichters 21 --S3'; das Wegeventil 93.S nimmt den Zustand AUF ein--. In beiden Fällen sind die als Balgventile dienenden Wegeventile 93 geschlossen. Auch in diesem Fall führt dann eine Intervall-Steuerfunktionalität für das Steuerventil 81 zum Aufbauen und Halten des Steuerdrucks wie dies anhand von Schritt S2 erläutert wurde.

Nach dem Beenden des Entlüftungsvorgangs im Schritt S4 wird schließlich im Schritt S5 durch ein erneutes Intervallsteuern des Steuerventils 81 in Form des 2/2-Wegeventils wird der zweite Teil 110.2 einer pneumatischen Steuerleitung 110, d. h. der Drucksteueranschluss 71S, drucklos gestellt bzw. auf Umgebungsdruck gestellt. Dazu wird der zweite Teil 110.2 bzw. die gesamte pneumatische Steuerleitung 110 im Schritt S5.1 entlüftet durch Öffnen des ersten und zweiten Steuer-Ventilanschlusses X2, Y2 des Steuerventils 81 zu Beginn der Intervall-Steuerfunktionalität; d. h. das Steuerventil 81 wird kurzzeitig bestromt und geht in den bestromten Zustand über; der im zweiten Teil 110.2 enthaltene Druck kann über den Lufttrockner 61 in der pneumatischen Hauptleitung 60 und die Drossel 62 entweichen --S5.1; das Steuerventil 81 nimmt den Zustand AUF ein--. Nach einer vorbestimmten Intervall-Zeitdauer wird im Schritt S5.2 die Bestromung des Steuerventils 81 aufgehoben und dieses fällt in den in Fig. 3 gezeigten stromlosen Zustand zurück und schließt damit den ersten Teil 110.1 gegen den zweiten Teil 110.2 einer pneumatischen Steuerleitung 110. Der Relaiskolben des Entlüftungsventils 71 ist damit auf Schaltdruck, der über dem Umgebungsdruck liegt, und die Entlüftungs-Ventilfeder 72 des Entlüftungsventils 71 schließt dieses in den nicht angesteuerten in Fig. 1 gezeigten Zustand, so dass die Entlüftungsleitung 70 geschlossen ist infolge der pneumatisch getrennten ersten und zweiten Entlüftungs-Ventilanschlüsse X1, Y1--S5.2; das Steuerventil 81 nimmt den Zustand ZU ein--. Der Entlüftungsvorgang ist damit beendet und kann wiederum mit Schritt S1 wiederholt werden. Mit Beginn des Schrittes S2.1 und bis zum Ende des Schrittes S4 wird ein Absenken des Fahrzeugsaufbaus 200 aufgrund des aus den Bälgen 91 entweichenden Luftvolumens, beispielsweise für die Frontachse 210 und/oder Rückachse 220, umgesetzt.

Fig. 3 bis Fig.4 und Fig. 5 zeigen jeweils Schaltkennlinien für ein Balgventil, d. h. ein in Fig. 1 und Fig. 2 genanntes Wegeventil 93 in einer Balg-Zweigleitung 91 L sowie für ein Entlüftungsventil 71 und für ein Steuerventil 81; gegebenenfalls ist auch eine Schaltkennlinie für einen Verdichter 21 und einen Druckspeicher 92 gezeigt bzw. für ein Magnet-Wegeventil 93.S in einer Speicher-Zweigleitung 92L. Die entsprechenden Kennlinien sind mit AV (Airspring-Ventil für ein Balgventil in Form des Wegeventils 93), EV (Exhaust-Ventil für Steuerventil 81) und VV (Ventilation-Ventil in Form des Entlüftungsventils 71) bzw. K (für den Kompressor im Verdichter 21) und RV (Reservoir-Ventil in Form eines Wegeventil 93.S) bezeichnet.

Fig. 3 zeigt in Teilansicht I einen Absenkungsprozess für den Fahrzeugaufbau mit Hilfe eines 2/2 Wegeventils als Steuerventil 81 ohne dass ein Rückhaltedruck bestehen bleibt, d. h. unter Nutzung eines Entlüftungsvorgangs bis auf Umgebungsdruck. In Teilansichten IA und IB sind besonders bevorzugte Abwandlungen dargestellt, die ebenfalls einen Rückhaltedruck vermeiden. Während in der Teilansicht I der Steuerdruck zur Ansteuerung des Steuerventils 81 im Wesentlichen aus den Bälgen 91 stammt (AV öffnet Wegeventil 93 bevor EV Steuerventil 81 öffnet; beide Prozesse können sich auch überschneiden) ist in der Abwandlung IA der Steuerdruck aus dem Druckspeicher 92 (RV öffnet Wegeventil 93.S bevor EV Steuerventil 81 öffnet) bzw. in der Abwandlung IB der Steuerdruck vom Verdichter 21 (K startet Verdichter 21 bevor oder während EV Steuerventil 81 öffnet) zur Verfügung gestellt. Die Abwandlung der Teilansicht IC sieht einen Absenkungsprozess unter Nutzung des 2/2 Magnet-Wegeventils als Steuerventil 81 vor, bei dem ein Rückhaltedruck bestehen bleibt. Hier wird ein Zeitintervall T von einem Zeitpunkt t₁ nach dem Öffnen eines Balgventils bis zu einem Zeitpunkt t₂ nach dem Schließen eines als Balgventil dienenden Wegeventils 93 aufgespannt.

In Teilansicht I öffnet zu einem Zeitpunkt t₁ zunächst ein als Balgventil dienendes Wegeventil 93 und anschließend zu einem Zeitpunkt t₂ das Steuerventil 81. Während das Steuerventil 81 offen ist, öffnet zu einem Zeitpunkt t₇ das Entlüftungsventil 71 und zu einem Zeitpunkt t₃ schließt das Steuerventil 81. Zu einem Zeitpunkt t₄ schließt auch das Wegeventil 93. Anschließend öffnet zu einem Zeitpunkt t₅ das Steuerventil 81 und während das Steuerventil 81 offen ist, schließt das Entlüftungsventil zu einem Zeitpunkt t₈; anschließend schließt das Steuerventil 81 zu einem Zeitpunkt t₆. Wie aus Teilansicht I erkennbar ist, schaltet gemäß der Kennlinie AV das als Balgventil dienende Wegeventil 93 vor einer ersten elektromagnetischen Intervallsteuerung mit einem ersten Zeitintervall Ti1 des Steuerventils 81 gemäß Kennlinie EV. Der durch die Schaltkennlinie VV des Entlüftungsventils 71 erkenntliche Absenkungsprozess beginnt zum Zeitpunkt T_{S} = t₇ --nämlich mit Belasten des Drucksteueranschlusses 71 S in einem ersten Zeitintervall Ti1 = t₃ - t₂ des Steuerventils 81--und endet zum Zeitpunkt T_{E} = t₄ --nämlich mit Entlasten des Drucksteueranschlusses 71 S mit einem zweiten Zeitintervall Ti2 des Steuerventils 81. Während des Absenkungsprozesses zwischen den Zeitpunkten T_{S} und T_{E} ist --im Wesentlichen im Bereich zwischen dem ersten elektromagnetischen Intervallsteuervorgang bis zum Beginn des zweiten elektromagnetischen Intervallsteuervorgangs, d. h. vom Ende des Zeitintervalls Ti1 bis zum Anfang des Zeitintervalls Ti2-- der Steuerdruck an den Drucksteueranschluss 71 S aufrecht bzw. konstant gehalten. Der Steuerdruck wird vorliegend aus den Bälgen 91 zur Verfügung gestellt, da die Magnet-Wegeventile 93 gemäß Kennlinie AV vor dem ersten elektronmagnetischen Intervallsteuervorgang öffnen.

Letzteres gilt grundsätzlich auch hinsichtlich der Abwandlung gemäß Teilansicht IC; diese sieht jedoch einen Resthaltedruck vor, bzw. muss einen Resthaltedruck vorsehen im Balg 91. Dazu schließt gemäß Kennlinie EV das Steuerventil 81 nach einem als Wegeventil 93 gebildeten Balgventil gemäß Kennlinie AV. Der Absenkungsprozess ist auf einen Zeitraum T_{S} = t₇ bis T_{E} = t₈ beschränkt. Konkret öffnet zu einem Zeitpunkt t₁ das als Balgventil dienende Wegeventil 93. Zu einem Zeitpunkt t₃ öffnet das Steuerventil 81 und anschließend zu einem Zeitpunkt t₇ öffnet das Entlüftungsventil 71. Das Entlüftungsventil 71 schließt wieder zum einen Zeitpunkt t₈. Anschließend schließt das Wegeventil 93 zu einem Zeitpunkt t₄ und wiederum anschließend schließt das Steuerventil 81 zu einem Zeitpunkt t₅.

Die Teilansichten IA und IB sind hinsichtlich der Kennlinien AV, VV und EV weitgehend gleich ausgebildet. Der Absenkungsprozess erfolgt zwischen den Zeitpunkten T_{S} und T_{E}. In beiden Fällen schließt ein Balgventil in Form des Magnet-Wegeventils 93 gemäß Kennlinie AV vor einem zweiten elektromagnetischen Intervallsteuervorgang des Steuerventils 81 gemäß Kennlinie EV. In beiden Fällen öffnet ein Balgventil in Form des Magnet-Wegeventils 93 gemäß Kennlinie AV nach einem bzw. mit Abschluss eines ersten elektromagnetischen Intervallsteuervorgangs des Steuerventils 81 gemäß Kennlinie EV.
Konkret öffnet in Teilansicht IA zu einem Zeitpunkt t₁ das als Speicherventil dienende Wegeventil 93.S und anschließend zu einem Zeitpunkt t₂ das Steuerventil 81. Während das Steuerventil 81 geöffnet ist, öffnet das Entlüftungsventil 71 zu einem Zeitpunkt t₇. Mit Schließen des Steuerventils 81 zu einem Zeitpunkt t₃ schließt auch das als Speicherventil dienende Wegeventil 93.S - dafür öffnet zum gleichen Zeitpunkt t₃ das als Balgventil dienende Wegeventil 93 und schließt wieder zu einem späteren Zeitpunkt t₄. Anschließend öffnet das Steuerventil 81 zu einem Zeitpunkt t₅ und während das Steuerventil 81 geöffnet ist, schließt das Entlüftungsventil 71 zu einem Zeitpunkt t₈. Anschließend schließt das Steuerventil 81 zu einem Zeitpunkt t₆. In Teilansicht IA öffnet ein Magnet-Wegeventil 93 als Balgventil gemäß Kennlinie AV erst nach bzw. mit Abschluss eines ersten elektromagnetischen Intervallsteuervorgangs für das Steuerventil 81 gemäß Kennlinie EV; jedoch ist ein Druckspeicher 92 gemäß Kennlinie RV vorher geöffnet. In dem Fall beginnt ein Absenkungsprozess mit Öffnen des Entlüftungsventils 71 zum Zeitpunkt T_{S} = t₇ gemäß Kennlinie VV und endet mit dem Schließvorgang des Wegeventils 93 zum Zeitpunkt T_{E} = t₄ gemäß Kennlinie AV.

Vorteilhaft ist während des gesamten Absenkungsprozesses unabhängig vom Druck in der Entlüftungsleitung 70 und der pneumatischen Hauptleitung 60 ein konstanter Steuerdruck am Steuerventil 81 aufrecht erhalten. Gemäß Teilansicht IA wird der Steuerdruck einem Druckspeicher 92 entnommen, dessen Speicherventil in Form eines Magnet-Wegeventils gemäß Kennlinie RV geschaltet ist. Für den ersten elektromagnetischen Intervallsteuervorgang des Steuerventils 81 steht somit eine ausreichende Druckamplitude zur Verfügung, um den Steuerdruck während des Zeitintervalls Ti1 = t₃ - t₂ aufzubauen und nach Abschluss des ersten Zeitintervalls Ti1 zu halten. Eine Entlüftung der pneumatischen Steuerleitung 110 findet wiederum nach Schließen des Balgventils, d. h. nach dem Zeitpunkt T_{E} während eines zweiten Zeitintervalls Ti2 = t₆ - t₅ gemäß Kennlinie EV statt.

In Teilansicht IB wird der Kompressor eines Verdichters 21 zu einem Zeitpunkt t₁ betrieben und während des Betriebs öffnet das Steuerventil 81 zu einem Zeitpunkt t₂. Zu einem Zeitpunkt t₃ wird der Betrieb des Kompressors eingestellt und das Steuerventil 81 schließt; dies jedoch erst nachdem das Entlüftungsventil 71 zu einem Zeitpunkt t₇ geöffnet hat. Zum gleichen Zeitpunkt t₃ öffnet das als Balgventil dienende Wegeventil 93 und schließt wieder zu einem Zeitpunkt t₄. Zu einem späteren Zeitpunkt t₅ öffnet das Steuerventil 81 und während dieses geöffnet ist, schließt das Entlüftungsventil zu einem Zeitpunkt t₈; anschließend schließt das Steuerventil 81 zu einem Zeitpunkt t₆. Gemäß Teilansicht IB wird der Druck zur Verfügung gestellt durch kurzzeitigen Betrieb des Luftverdichters 21 gemäß Kennlinie K vor und während des ersten Zeitintervalls Ti1. Auch in Teilansicht IB öffnet ein Magnet-Wegeventil als Balgventil gemäß Kennlinie AV erst nach bzw. mit Abschluss eines ersten elektromagnetischen Intervallsteuervorgangs mit Zeitintervall Ti1 für das Steuerventil 81 gemäß Kennlinie EV; jedoch läuft ein Verdichter 21 während das Steuerventil 81 offen ist. In dem Fall öffnet das Entlüftungsventil 71 gemäß Kennlinie VV mit Beginn des oder im ersten elektromagnetischen Zeitintervallsteuervorgang Ti1 = t₃ - t₂ und schließt mit Beginn des oder im zweiten elektromagnetischen Zeitintervallsteuervorgang Ti2 = t₆ - t₅. Ein Absenkungsprozess beginnt mit Öffnen des Wegeventils 93 zum Zeitpunkt T_{S} = t₃ gemäß Kennlinie AV und endet mit dem Schließvorgang des Wegeventils 93 zum Zeitpunkt T_{E} = t₄ gemäß Kennlinie AV.

Fig. 4 veranschaulicht mit den Teilansichten IIA und IIB wie ein Auffüllen des Druckspeichers 92 erfolgen kann. Konkret öffnet gemäß Teilansicht IIA zum Zeitpunkt t₁ zunächst das Steuerventil 81 und während dies geöffnet ist, öffnet auch das Entlüftungsventil 71 zu einem Zeitpunkt t₂ und schließt wieder bevor das Steuerventil 81 zu einem Zeitpunkt t₃ schließt. Zum gleichen Zeitpunkt t₃ läuft der Kompressor eines Verdichters 21 an. Mit dem Öffnen eines Speicherventils zu einem Zeitpunkt t₄ = T_{S} beginnt der Befüllvorgang. Mit dem Schließen eines Speicherventils zu einem Zeitpunkt t₅ = T_{E} endet der Befüllvorgang. Anschließend öffnet zu einem Zeitpunkt t₆ das Steuerventil 81 und während dieses geöffnet ist, öffnet das Entlüftungsventil 71 zu einem Zeitpunkt t₇; dies jedoch erst mit bzw. nach Beendigung des Betriebs des Kompressors zu einem Zeitpunkt t₇. Bevor das Steuerventil zu einem Zeitpunkt t₈ schließt, ist das Entlüftungsventil 71 bereits geschlossen.
Beispielsweise kann gemäß Teilansicht IIA als erstes mit einem elektromagnetischen Intervallsteuervorgang das Steuerventil 81 geschaltet und in den offenen Zustand versetzt werden gemäß Kennlinie EV. So wird ein Kompressoranlauf mit möglichst niedrigem Gegendruck realisiert. Nach dem oder während des ersten Zeitintervalls Ti1 = t₃ - t₁ wird der Betrieb des Luftverdichters 21 aufgenommen. Im vorliegenden Fall wird das Steuerventil 81 gemäß Kennlinie EV angesteuert bevor der Verdichter 21, insbesondere der Kompressor, angesteuert wird. Eine Ansteuerung des Steuerventils 81 kann in einer bevorzugten weitergebildeten Ausführungsform nur dann erfolgen, wenn ein z. B. über einen Drucksensor 94 ermittelter Galeriedruck größer als ein vorbestimmter Grenzwert ist. Hier kann für den Fall, dass der Galeriedruck unter dem vorbestimmten Grenzwert liegt, eine Kennlinie EV und K so angepasst werden, dass eine Ansteuerung des Steuerventils 81 vor dem Verdichter 21 unterbleibt.

Teilansicht IIB zeigt den im Wesentlichen gleichen Prozess hinsichtlich der Kennlinien K, RV und EV. Jedoch wird nach Schließend des Druckspeichers 92 gemäß Kennlinie RV für das Wegeventil 93.S das Balgventil zunächst geöffnet, so dass die Druckluftversorgungsanlage 10 zunächst in den über das Balgventil angeschlossenen Balg 91 entlüftet wird, bevor das Entlüftungsventil 71 gemäß Kennlinie VV --angesteuert vom Steuerventil 81 gemäß Kennlinie EV-- während Zeitintervall Ti2 = t₉ - t₆ geschlossen wird. Konkret öffnet das Balgventil zu einem Zeitpunkt t₉ unmittelbar nachdem das Speicherventil zum Zeitpunkt t₅ schließt. Das Balgventil schließt wieder zu einem Zeitpunkt t₁₀ unmittelbar bevor zu einem Zeitpunkt t₆ das Steuerventil 81 öffnet und noch während der Kompressor läuft.

Die gleiche Zeitabfolge von t₁ bis t₈ gilt auch für die in Teilansicht IIIA und IIIB gezeigten Hebevorgänge der Fig. 5 mit dem Unterschied, dass zum Zeitpunkt t₄ und t₅ jeweils das Wegeventil 93 als Balgventil geschaltet wird, während zu den Zeitpunkten t₉ und t₁₀ in Teilansicht IIIB ein Speicherventil 93.S geschaltet wird; dies zeitlich versetzt, d. h. t₉ folgt nach t₄ und t₁₀ folgt nach t₅.

Fig. 5 zeigt in Teilansichten IIIA, IIIB, IIIC, IIID den grundsätzlichen gegeneinander abgestimmten Kennlinienverlauf eines als Balgventil dienenden Wegeventils 93 und/oder eines als Speicherventil dienenden Wegeventils 93.S im Verhältnis zu einem Steuerventil 81. In den Kennlinien IIIA, IIIB und III D ist ein erstes elektromagnetisches Intervallsteuern mit Zeitintervall Ti1 = t₃ - t₁ und ein zweites elektromagnetisches Intervallsteuern mit Zeitintervall Ti2 = t₈ - t₆ gemäß Kennlinie EV einem Öffnen und Schließen eines als Balgventil dienenden Wegeventils 93 gemäß Kennlinie AV vorgelagert bzw. nachgelagert. Wie jeweils aus den Kennlinien K für einen Luftverdichter 21 erkennbar ist, wird Druckluft aus der Druckluftzuführung zur Verfügung gestellt, um gemäß Teilansicht IIIA einen Balg oder eine Reifenaufblasfunktion mit Druckluft zu versorgen oder gemäß Teilansicht IIIB auch einen Druckspeicher mit Druckluft zu versorgen (und damit z. B. zusätzlich zum Verdichter 21 als Druckquelle zum Heben zu nutzen), wenn ein entsprechendes Magnet-Wegeventil vor dem Druckspeicher 92 gemäß Kennlinie RV öffnet und schließt.

Gemäß Teilansicht IIIC öffnet zu einem Zeitpunkt t₁ zunächst ein Speicherventil in Form des Wegeventils 93.S und anschließend ein Balgventil in Form des Wegeventils 93 zu einem Zeitpunkt t₂. Anschließend schließt zu einem Zeitpunkt t₃ das Speicherventil und anschließend auch zu einem Zeitpunkt t₄ das Balgventil. Zu einem Zeitpunkt t₅ öffnet das Steuerventil 81 und zu einem Zeitpunkt t₆ schließt dasselbe.

Teilansicht IIIC zeigt einen Sonderfall, bei dem ein Befüllen der Pneumatikanlage 90 aus dem Druckspeicher 92 erfolgen kann. Dazu öffnet zunächst das Magnet-Wegeventil 93.S in der Speicher-Zweigleitung 92L vor dem Druckspeicher 92 und anschließend ein Balgventil in Form eines Magnet-Wegeventils 93. Dadurch kann ein Fahrzeugaufbau mit Druckluft aus dem Druckspeicher 92 unter Befüllen der Bälge angehoben werden. Nach Abschluss des Vorgangs durch Schließen der Balgventile gemäß Kennlinie AV kann ein kurzer Entlüftungsprozess folgen, in dem das Steuerventil 81 im Zeitintervall Ti = t₆ - t₅ kurzzeitig öffnet und dann wieder schließt gemäß Kennlinie EV. Bei allen Teilansichten IIIA, IIIB, IIIC ist ein Hebevorgang auf den Zeitraum zwischen den Zeitpunkten T_{S} und T_{E} beschränkt, der mit dem Schließen eines Balgventils bzw. Speicherventils endet zum Zeitpunkt T_{E}. Initiiert wird der Hebeprozess in Teilansicht IIIA mit Beginn der ersten elektromagnetischen Intervallsteuerung mit Zeitintervall Ti1 in Teilansicht IIIB ebenso und in Teilansicht IIIC mit Öffnen eines Speicherventils vor einem Druckspeicher 92 zum Zeitpunkt T_{S}.

Teilansicht IIID zeigt mit im Wesentlichen gleichen Zeitpunkten t₁ bis t₈ den Kennlinienverlauf der Kennlinien K, AV, EV, VV. Zum Heben mit Kompressor zwischen den Zeitpunkten T_{S} = t₄ und T_{E} = t₅ wird zunächst die Galerie 95 geflutet. Dazu wird Druckluft einem Reservoir wie vorliegend dem Druckspeicher 92 zum sicheren Öffnen des Entlüftungsventils 71 dem Zeitpunkt t₂ entnommen, indem zum Zeitpunkt t₀ noch vor Öffnen des Steuerventils 81 das als Speicherventil ausgebildete Wegeventil 93.S geöffnet wird und zum Zeitpunkt t₁ geschlossen wird, wenn das Steuerventil 81 öffnet.

### Bezugszeichenliste

- 0: Luftzuführungsanschluss
- 1: Druckluftzuführung
- 2: Druckluftanschluss
- 3: Entlüftungsanschluss
- 10: Druckluftversorgungsanlage
- 20: Luftzuführungsleitung
- 21: Verdichtereinheit
- 21.1: Kompressor
- 21.2: Elektromotor
- 22: Luftzuführung
- 23: Filter
- 24.1, 24.2: Rückschlagventil
- 40: Datenbus
- 41, 47: Stromleitungen
- 42: Relais
- 43, 46: elektrische Steuerleitungen
- 44, 45, 48: Sensorleitungen
- 50: Steckverbindung
- 60: pneumatische Hauptleitung
- 61: Lufttrockner
- 62: Drossel
- 63: Zweiganschluss der pneumatischen Hauptleitung
- 70: Entlüftungsleitung
- 71: Entlüftungsventil
- 72: Entlüftungs-Ventilfeder
- 74: Relaisdruckbegrenzer
- 80: Magnetventilanordnung
- 81: Steuerventil
- 82: Steuer-Ventilfeder
- 90: Pneumatikanlage
- 91: Balg
- 91L: Balg-Zweigleitung
- 92: Druckspeicher
- 92L: Speicher-Zweigleitung
- 93, 93.S: Wegeventil
- 94: Drucksensor
- 95: Galerie
- 96: weitere Pneumatikleitung
- 97: Höhensensoren
- 98: Ventilblock
- 99: Balg-Drucksensor
- 100: pneumatisches System
- 110: pneumatische Steuerleitung
- 110.1, 110.2: erster Teil, zweiter Teil der pneumatischen Steuerleitung
- 111: Rückschlagventil
- 120: druckhaltende pneumatische Einrichtung
- 200: Fahrzeugaufbau
- 210: Frontachse
- 220: Rückachse
- 1000: Fahrzeug
- X1, Y1: erster, zweiter Entlüftungs-Ventilanschluss
- X2, Y2: erster, zweiter Steuer-Ventilanschluss
- AV, EV, VV, K, RV: Kennlinien
- T_{S}, T_{E}: Zeitpunkt
- Ti1, Ti2: Zeitintervall

## Patentansprüche

1. Druckluftversorgungsanlage zum Betreiben einer Pneumatikanlage, insbesondere einer Luftfederanlage eines Fahrzeugs, aufweisend:
- eine Druckluftzuführung (1);
- einen Druckluftanschluss (2) zur Pneumatikanlage (90);
- einen Entlüftungsanschluss (3) zur Umgebung;
- eine pneumatische Hauptleitung (60) zwischen der Druckluftzuführung (1) und dem Druckluftanschluss (2), die einen Lufttrockner (61) aufweist,
- eine Entlüftungsleitung (70) zwischen der Druckluftzuführung (1) und dem Entlüftungsanschluss (3);
- eine Magnetventilanordnung (80) mit einem Steuerventil (81) zur Steuerung eines Entlüftungsventils (71), wobei
das Steuerventil (81) mit einem Steuer-Ventilanschluss (X2, Y2) in einer, an einem Drucksteueranschluss (71 S) des Entlüftungsventils (71) angeschlossenen, pneumatischen Steuerleitung (110), und das Entlüftungsventil (71) mit einem Entlüftungs-Ventilanschluss (X1, Y1) in der Entlüftungsleitung (70) angeschlossen ist,
**dadurch gekennzeichnet, dass**
an die pneumatische Steuerleitung (110) eine druckhaltende pneumatische Einrichtung (120) angeschlossen ist, die ausgebildet ist, den Drucksteueranschluss (71 S) bei geöffnetem Entlüftungs-Ventilanschluss (X1, Y1) des Entlüftungsventils (71) in der Entlüftungsleitung (70) unter Steuerdruck zu halten, unabhängig von einem Druck in der Entlüftungsleitung (70) und/oder der pneumatischen Hauptleitung (60), derart, dass der Druck in der Entlüftungsleitung (70) und/oder der pneumatischen Hauptleitung (60) praktisch bis auf einen Umgebungsdruck absinken kann.

2. Druckluftversorgungsanlage nach Anspruch 1 **dadurch gekennzeichnet, dass**
die druckhaltende pneumatische Einrichtung (120) ausgebildet ist, den Drucksteueranschluss (71 S) bei geöffnetem Entlüftungs-Ventilanschluss (X1, Y1) des Entlüftungsventils (71) in der Entlüftungsleitung (70) derart unter Druck zu halten, dass ein Druck in der Entlüftungsleitung (70) und/oder der pneumatischen Hauptleitung (60) variabel wählbar ist, insbesondere unter einen Resthaltedruck absinken kann.

3. Druckluftversorgungsanlage nach Anspruch 1 oder 2 **dadurch**
**gekennzeichnet, dass**
ein Resthaltedruck durch eine, insbesondere variabel einstellbare, Entlüftungs-Ventilfeder (72) des Entlüftungsventils (71) vorgegeben ist.

4. Druckluftversorgungsanlage nach einem der Ansprüche 1 bis 3 **dadurch**
**gekennzeichnet, dass**
die druckhaltende pneumatische Einrichtung (120), insbesondere nur, mit dem Steuerventil (81) gebildet ist, wobei das Steuerventil (81) einen ersten und einen zweiten Steuer-Ventilanschluss (X2, Y2) aufweist, die in der pneumatischen Steuerleitung (110) angeschlossen sind und das Steuerventil (81) frei von einem Ventilanschluss zur Umgebung ist, insbesondere das Steuerventil (81) in Form eines 2/2-Wegeventils gebildet ist.

5. Druckluftversorgungsanlage nach einem der Ansprüche 1 bis 4 **dadurch**
**gekennzeichnet, dass**
das Steuerventil (81) elektro-magnetisch intervallsteuerbar ist derart, dass
intervallbeginnend zum Aufbau des Steuerdrucks auf den Drucksteueranschluss (71S) ein erster und ein zweiter Steuer-Ventilanschluss (X2, Y2) zu öffnen sind und intervallendend zum Halten des Drucksteueranschluss (71S) unter Steuerdruck der erste und der zweite Steuer-Ventilanschluss (X2, Y2) zu schließen sind.

6. Druckluftversorgungsanlage nach einem der Ansprüche 1 bis 5 **dadurch**
**gekennzeichnet, dass**
die pneumatische Steuerleitung (110) an einen Druckspeicher (92) angeschlossen ist, insbesondere von einer zu einem Druckspeicher (92) führenden Speicher-Zweigleitung (92L) abzweigt, insbesondere die pneumatische Steuerleitung (110) frei von einem Anschluss zur pneumatischen Hauptleitung (60) ist.

7. Druckluftversorgungsanlage nach einem der Ansprüche 1 bis 6 **dadurch**
**gekennzeichnet, dass**
die pneumatische Steuerleitung (110) schaltbar an einen Luftverdichter (21) und/oder schaltbar an einen Balg (91) und/oder schaltbar an einen Druckspeicher (92) angeschlossen ist, insbesondere von der pneumatischen Hauptleitung (60) abzweigt.

8. Pneumatisches System mit der Druckluftversorgungsanlage nach einem der Ansprüche 1 bis 7 und einer Pneumatikanlage, insbesondere die Pneumatikanlage (90) in Form einer Luftfederanlage gebildet ist, die eine Galerie (95) und wenigstens eine an die Galerie pneumatisch angeschlossene Balg- und/oder Speicher-Zweigleitung (91 L, 92L) aufweist, wobei die angeschlossene Balg- und/oder Speicher-Zweigleitung (91 L, 92L) einen Balg (91) und/oder einen Druckspeicher (92) aufweist, wobei dem Balg (91) und/oder dem Druckspeicher (92) jeweils ein Wegeventil (93) vorgeordnet ist.

9. Verfahren zum Steuern einer Druckluftversorgungsanlage zum Betreiben einer Pneumatikanlage, insbesondere einer Luftfederanlage eines Fahrzeugs, nach einem der vorhergehenden Ansprüche wobei die Druckluftversorgungsanlage aufweist:
- eine Druckluftzuführung (1)
- einen Druckluftanschluss (2) zur Pneumatikanlage (90)
- einen Entlüftungsanschluss (3) zur Umgebung
- eine pneumatische Hauptleitung (60) zwischen der Druckluftzuführung (1) und dem Druckluftanschluss (2), die einen Lufttrockner (61) aufweist,
- eine Entlüftungsleitung (70) zwischen der Druckluftzuführung (1) und dem Entlüftungsanschluss (3),
- eine Magnetventilanordnung (80) mit einem Steuerventil (81) zur Steuerung eines Entlüftungsventils (71), wobei
das Steuerventil (81) mit einem Steuer-Ventilanschluss (X2, Y2) in einer, an einem Drucksteueranschluss (71S) des Entlüftungsventils (71) angeschlossenen, pneumatischen Steuerleitung (110), und das Entlüftungsventil (71) mit einem Entlüftungs-Ventilanschluss (X1, Y1) in der Entlüftungsleitung (70) angeschlossen ist,
**dadurch gekennzeichnet, dass**
die druckhaltende pneumatische Einrichtung (120) mit dem Steuerventil (81) gebildet ist, wobei das Steuerventil (81) einen ersten und einen zweiten Steuer-Ventilanschluss (X2, Y2) aufweist, die in der pneumatischen Steuerleitung (110) angeschlossen sind und das Steuerventil (81) frei von einem Ventilanschluss zur Umgebung ist, insbesondere das Steuerventil (81) in Form eines 2/2-Wegeventils gebildet ist, wobei das Verfahren die Schritte aufweist:
- Anschließen einer druckhaltenden pneumatischen Einrichtung an die pneumatische Steuerleitung (110),
- Aufbauen von Steuerdruck an den Drucksteueranschluss (71 S) des Entlüftungsventils (71),
- Öffnen des Entlüftungs-Ventilanschlusses (X1, Y1) des Entlüftungsventils (71) in der Entlüftungsleitung (70),
- Halten des Steuerdrucks am Drucksteueranschluss (71 S) des Entlüftungsventils (71) bei geöffnetem Entlüftungs-Ventilanschluss (X1, Y1) des Entlüftungsventils (71), unabhängig von einem Druck in der Entlüftungsleitung (70) und/oder der pneumatischen Hauptleitung (60),
- elektromagnetisches Intervallsteuern des Steuerventils (81), wobei
intervallbeginnend zum Aufbau des Steuerdrucks auf den Drucksteueranschluss (71 S) der erste und der zweite Steuer-Ventilanschluss (X2, Y2) geöffnet werden und
intervallendend zum Halten des Drucksteueranschluss (71 S) unter Steuerdruck der erste und der zweite Steuer-Ventilanschluss (X2, Y2) geschlossen werden.

10. Verfahren nach Anspruch 9, **dadurch gekennzeichnet, dass**
ein erstes elektro-magnetisches Intervallsteuern des Steuerventils (81) vorgenommen wird vor oder bei Beginn eines Entlüftungsprozesses der Entlüftungsleitung (70) und der pneumatischen Hauptleitung (60), und
ein zweites elektro-magnetisches Intervallsteuern des Steuerventils (81) vorgenommen wird bei oder nach dem Ende eines Entlüftungsprozesses der Entlüftungsleitung (70) und der pneumatischen Hauptleitung (60).

11. Verfahren nach einem der Ansprüche 9 oder 10, **dadurch gekennzeichnet, dass** ein erstes elektro-magnetisches Intervallsteuern des Steuerventils (81) vorgenommen wird vor, bei oder nach dem Öffnen eines dem Balg (91) und/oder dem Druckspeicher (92) vorgeordneten Wegeventils (93, 93.S).

12. Verfahren nach einem der Ansprüche 9 bis 11, **dadurch gekennzeichnet, dass** ein zweites elektro-magnetisches Intervallsteuern des Steuerventils (81) vorgenommen wird bei oder nach dem Schließen eines dem Balg (91) und/oder dem Druckspeicher (92) vorgeordneten Wegeventils (93, 93.S).

13. Verfahren nach einem der Ansprüche 9 bis 12, **dadurch gekennzeichnet, dass** ein zweites elektro-magnetisches Intervallsteuern des Steuerventils (81) vorgenommen wird zu einem Zeitpunkt, der abhängig von einem Betrag eines Drucks im Balg (91) und/oder Druckspeicher (92) ist, insbesondere zu einem Zeitpunkt an dem der Druck im Balg einem vorgegebenen Restdruck oder Umgebungsdruck entspricht.

## Claims

1. Compressed air supply assembly for operating a pneumatic assembly, in particular an air spring assembly of a vehicle, comprising:
- a compressed air supply (1);
- a compressed air connection (2) to the pneumatic assembly (90);
- a purge connection (3) to the environment;
- a pneumatic main line (60) between the compressed air supply (1) and the compressed air connection (2), comprising an air dryer (61);
- a purge line (70) between the compressed air supply (1) and the purge connection (3);
- a solenoid valve arrangement (80) with a control valve (81) to control a purge valve (71), wherein
the control valve (81) is connected to a control valve connection (X2, Y2) in a pneumatic control line (110) which is connected to a pressure control connection (71S) of the purge valve (71), and the purge valve (71) is connected to a purge valve connection (X1, Y1) in the purge line (70),
**characterized in that**
a pressure-maintaining pneumatic device (120) is connected to the pneumatic control line (110) and is adapted to maintain control pressure at the pressure control connection (71S) when the purge valve connection (X1, Y1) of the purge valve (71) in the purge line (70) is open, independently of a pressure in the purge line (70) and/or the pneumatic main line (60), such that the pressure in the purge line (70) and/or in the pneumatic main line (60) can fall practically to ambient pressure.

2. Compressed air supply assembly according to Claim 1, **characterized in that** the pressure-maintaining pneumatic device (120) is adapted to maintain a pressure at the pressure control connection (71S) when the purge valve connection (X1, Y1) of the purge valve (71) in the purge line (70) is open such that a pressure in the purge line (70) and/or the pneumatic main line (60) can be selected variably, in particular can fall below a residual maintaining pressure.

3. Compressed air supply assembly according to Claim 1 or 2, **characterized in that** a residual maintaining pressure is predefined by an in particular variably adjustable purge valve spring (72) of the purge valve (71).

4. Compressed air supply assembly according to any of Claims 1 to 3, **characterized in that** the pressure-maintaining pneumatic device (120) is formed in particular only with the control valve (81), wherein the control valve (81) comprises a first and a second control valve connection (X2, Y2) which are connected in the pneumatic control line (110) and the control valve (81) has no valve connection to the environment, in particular the control valve (81) is formed as a 2/2-way valve.

5. Compressed air supply assembly according to any of Claims 1 to 4, **characterized in that** the control valve (81) is electromagnetically interval-controllable such that at the start of the interval, to build up a control pressure at the pressure control connection (71S), a first and a second control valve connection (X2, Y2) must be opened and to end the interval, to maintain the control pressure at the pressure control connection (71S), the first and the second control valve connections (X2, Y2) must be closed.

6. Compressed air supply assembly according to any of Claims 1 to 5, **characterized in that** the pneumatic control line (110) is connected to a pressure accumulator (92), in particular branches from an accumulator branch line (92L) leading to a pressure accumulator (92), in particular the pneumatic control line (110) has no connection to the main pneumatic line (60).

7. Compressed air supply assembly according to any of Claims 1 to 6, **characterized in that** the pneumatic control line (110) is connected switchably to an air compressor (21) and/or switchably to a bellows (91) and/or switchably to a pressure accumulator (92), in particular branches from the main pneumatic line (60).

8. Pneumatic system with the compressed air supply assembly according to any of Claims 1 to 7 and a pneumatic assembly, in particular the pneumatic assembly (90) is formed in the form of an air spring assembly which comprises a gallery (95) and at least one bellows and/or accumulator branch line (91L, 92L) pneumatically connected to the gallery, wherein the connected bellows and/or accumulator branch line (91L, 92L) comprises a bellows (91) and/or a pressure accumulator (92), wherein a directional valve (93) is arranged before the bellows (91) and/or the pressure accumulator (92) respectively.

9. Method for controlling a compressed air supply assembly for operating a pneumatic assembly, in particular an air spring assembly of a vehicle, according to any of the preceding claims, wherein the compressed air supply assembly comprises:
- a compressed air supply (1),
- a compressed air connection (2) to the pneumatic assembly (90),
- a purge connection (3) to the environment,
- a pneumatic main line (60) between the compressed air supply (1) and the pressure connection (2), comprising an air dryer (61),
- a purge line (70) between the compressed air supply (1) and the purge connection (3),
- a solenoid valve arrangement (80) with a control valve (81) to control a purge valve (71), wherein
the control valve (81) is connected to a control valve connection (X2, Y2) in a pneumatic control line (110) which is connected to a pressure control connection (71S) of the purge valve (71), and the purge valve (71) is connected to a purge valve connection (X1, Y1) in the purge line (70),
**characterized in that** the pressure-maintaining pneumatic device (120) is formed with the control valve (81), wherein the control valve (81) comprises a first and a second control valve connection (X2, Y2) which are connected in the pneumatic control line (110), and the control valve (81) has no valve connection to the environment, in particular the control valve (81) is formed as a 2/2-way valve, wherein the method comprises the steps:
- connection of a pressure-maintaining pneumatic device to the pneumatic control line (110),
- build up of control pressure at the pressure control connection (71S) of the purge valve (71),
- opening of the purge valve connection (X1, Y1) of the purge valve (71) into the purge line (70),
- maintaining the control pressure at the pressure control connection (71S) of the purge valve (71) when the purge valve connection (X1, Y1) of purge valve (71) is open, independently of a pressure in the purge line (70) and/or the pneumatic main line (60),
- electromagnetic interval-control of the control valve (81), wherein at the start of the interval, to build up the control pressure at the pressure control connection (71S), the first and the second control valve connections (X2, Y2) are opened, and to end the interval, to maintain the control pressure at the pressure control connection (71S), the first and the second control valve connections (X2, Y2) are closed.

10. Method according to Claim 9, **characterized in that** a first electromagnetic interval control of the control valve (81) is performed before or at the start of a purging process of the purge line (70) and of the pneumatic main line (60), and a second electromagnetic interval control of the control valve (81) is performed at or after the end of a purging process of the purge line (70) and of the pneumatic main line (60).

11. Method according to either of Claims 9 and 10, **characterized in that** a first electromagnetic interval control of the control valve (81) is performed before, during or after the opening of a directional valve (93, 93.S) arranged before the bellows (91) and/or the pressure accumulator (92).

12. Method according to any of Claims 9 to 11, **characterized in that** a second electromagnetic interval control of the control valve (81) is performed during or after the closing of a directional valve (93, 93.S) arranged before the bellows (91) and/or the pressure accumulator (92).

13. Method according to any of Claims 9 to 12, **characterized in that** a second electromagnetic interval control of the control valve (81) is performed at a time which is dependent on a magnitude of a pressure in the bellows (91) and/or pressure accumulator (92), in particular at a time at which the pressure in the bellows corresponds to a predefined residual pressure or ambient pressure.

## Revendications

1. Installation de fourniture d'air comprimé destinée à alimenter une installation pneumatique, en particulier une installation de suspension pneumatique de véhicule, et présentant :
une amenée (1) d'air comprimé,
un raccord (2) raccordant l'air comprimé à l'installation pneumatique (90),
un raccord (3) évacuant l'air vers l'environnement,
un conduit pneumatique principal (60) situé entre l'amenée (1) d'air comprimé et le raccord (2) d'air comprimé, le conduit présentant un sécheur (61) d'air,
un conduit (70) d'évacuation d'air situé entre l'amenée (1) d'air comprimé et le raccord (3) d'évacuation d'air,
un ensemble (80) à soupape magnétique présentant une soupape de commande (81) qui commande une soupape (71) d'évacuation d'air,
la soupape de commande (81) étant raccordée à un raccord (X2, Y2) de soupape de commande situé dans un conduit (110) de commande pneumatique raccordé à un raccord (71S) de commande de pression de la soupape (71) d'évacuation d'air, la soupape (71) d'évacuation d'air étant raccordée à un raccord (X1, Y1) de soupape d'évacuation d'air situé dans le conduit (70) d'évacuation d'air,
**caractérisée en ce que**
un dispositif pneumatique (120) de maintien de pression est raccordé au conduit pneumatique de commande (110) et est configuré pour maintenir sous pression de commande le raccord (71S) de commande de pression lorsque le raccord (X1, Y1) de soupape d'évacuation d'air de la soupape (71) d'évacuation d'air située dans le conduit (70) d'évacuation d'air est ouverte quelle que soit la pression qui règne dans le conduit (70) d'évacuation d'air et/ou dans le conduit pneumatique principal (60), de manière à ce que la pression qui règne dans le conduit (70) d'évacuation d'air et/ou dans le conduit pneumatique principal (60) puisse en pratique descendre jusqu'à la pression ambiante.

2. Installation de fourniture d'air comprimé selon la revendication 1, **caractérisée en ce que** le dispositif pneumatique (120) de maintien de la pression est configuré pour maintenir sous pression le raccord (71S) de commande de pression lorsque le raccord (X1, Y1) de soupape d'évacuation d'air de la soupape (71) d'évacuation d'air située dans le conduit (70) d'évacuation d'air est ouvert, de manière à ce que l'on puisse modifier de manière sélective la pression qui règne dans le conduit (70) d'évacuation d'air et/ou dans le conduit pneumatique principal (60) et en particulier l'abaisser en dessous d'une pression résiduelle de maintien.

3. Installation de fourniture d'air comprimé selon les revendications 1 ou 2, **caractérisée en ce que** la pression résiduelle de maintien est prédéterminée par un ressort (72) de la soupape (71) d'évacuation d'air, le réglage du ressort pouvant en particulier être modifié.

4. Installation de fourniture d'air comprimé selon l'une des revendications 1 à 3, **caractérisée en ce que** le dispositif pneumatique (120) de maintien de pression est formé en particulier uniquement avec la soupape de commande (81), la soupape de commande (81) présentant un premier et un deuxième raccord (X2, Y2) de soupape de commande qui sont raccordés dans le conduit pneumatique de commande (110), la soupape de commande (81) ne présentant pas de raccord à l'environnement et la soupape de commande (81) présentant en particulier la forme d'une soupape à 2/2 voies.

5. Installation de fourniture d'air comprimé selon l'une des revendications 1 à 4, **caractérisée en ce que** la soupape de commande (81) peut être commandée électromagnétiquement par intervalles de telle sorte qu'au début d'un intervalle, pour établir la pression de commande sur le raccord (71S) de commande de pression, il faut ouvrir un premier et un deuxième raccord (X2, Y2) de soupape de commande et qu'à la fin de l'intervalle, pour maintenir le raccord (71S) de commande de pression sous la pression de commande, il faut fermer le premier et le deuxième raccord (X2, Y2) de soupape de commande.

6. Installation de fourniture d'air comprimé selon l'une des revendications 1 à 5, **caractérisée en ce que** le conduit pneumatique de commande (110) est raccordé à une réserve (92) sous pression, et en particulier part d'un branchement (92L) et conduit à une réserve (92) sous pression, le conduit pneumatique de commande (110) étant en particulier exempt de raccord au conduit pneumatique principal (60).

7. Installation de fourniture d'air comprimé selon l'une des revendications 1 à 6, **caractérisée en ce que** le conduit pneumatique de commande (110) est raccordé de manière commutable à un compresseur d'air (21), à un soufflet (91) et/ou à une réserve (92) sous pression et dérive en particulier du conduit pneumatique principal (60).

8. Système pneumatique présentant une installation de fourniture d'air comprimé selon l'une des revendications 1 à 7 et une installation pneumatique, l'installation pneumatique (90) étant en particulier configurée sous la forme d'une installation d'amortissement pneumatique qui présente une galerie (95) et au moins un branchement (91L, 92L) conduisant vers un soufflet et/ou une réserve, raccordé pneumatiquement à la galerie, le branchement (91L, 92L) conduisant vers le soufflet et/ou la réserve présentant un soufflet (91) et/ou une réserve (92) sous pression, une soupape de passage (93) étant disposée en amont du soufflet (91) et/ou de la réserve (92) sous pression.

9. Procédé de commande d'une installation de fourniture d'air comprimé destiné à alimenter une installation pneumatique, en particulier l'installation d'amortissement pneumatique d'un véhicule, selon l'une des revendications précédentes, l'installation de fourniture d'air comprimé présentant :
une amenée (1) d'air comprimé,
un raccord (2) raccordant l'air comprimé à l'installation pneumatique (90),
un raccord (3) évacuant l'air vers l'environnement,
un conduit pneumatique principal (60) situé entre l'amenée (1) d'air comprimé et le raccord (2) d'air comprimé, le conduit présentant un sécheur (61) d'air,
un conduit (70) d'évacuation d'air situé entre l'amenée (1) d'air comprimé et le raccord (3) d'évacuation d'air,
un ensemble (80) à soupape magnétique présentant une soupape de commande (81) qui commande une soupape (71) d'évacuation d'air,
la soupape de commande (81) étant raccordée à un raccord (X2, Y2) de soupape de commande situé dans un conduit (110) de commande pneumatique raccordé à un raccord (71S) de commande de pression de la soupape (71) d'évacuation d'air, la soupape (71) d'évacuation d'air étant raccordée à un raccord (X1, Y1) de soupape d'évacuation d'air situé dans le conduit (70) d'évacuation d'air,
**caractérisé en ce que**
le dispositif pneumatique (120) de maintien de pression est formé de la soupape de commande (81), la soupape de commande (81) présentant un premier et un deuxième raccord (X2, Y2) de soupape de commande qui sont raccordés dans le conduit pneumatique de commande (110), la soupape de commande (81) ne présentant pas de raccord à l'environnement et en particulier la soupape de commande (81) présente la forme d'une soupape à 2/2 voies, le procédé présentant les étapes suivantes :
raccordement d'un dispositif pneumatique de maintien de pression au conduit de commande pneumatique (110),
établissement d'une pression de commande sur le raccord (71S) de commande de pression de la soupape (71) d'évacuation d'air,
ouverture du raccord (X1, Y1) de la soupape (71) d'évacuation d'air prévue dans le conduit (70) d'évacuation d'air,
maintien de la pression de commande sur le raccord (71S) de commande de pression de la soupape (71) d'évacuation d'air pendant que le raccord (X1, Y1) de la soupape (71) d'évacuation d'air est ouvert quelle que soit la pression qui règne dans le conduit (70) d'évacuation d'air et/ou dans le conduit pneumatique principal (60),
commande électromagnétique d'intervalle de la soupape de commande (81) de telle sorte qu'au début d'un intervalle, pour établir la pression de commande sur le raccord (71S) de commande de pression, un premier et un deuxième raccord (X2, Y2) de soupape de commande sont ouverts et qu'à la fin de l'intervalle, pour maintenir le raccord (71S) de commande de pression sous la pression de commande, le premier et le deuxième raccord (X2, Y2) de soupape de commande sont fermés.

10. Procédé selon la revendication 9, **caractérisé en ce qu'**une première commande électromagnétique d'intervalle de la soupape de commande (81) est réalisée avant ou au début d'une opération d'évacuation d'air du conduit (70) d'évacuation d'air et du conduit pneumatique principal (60) et **en ce qu'**une deuxième commande électromagnétique d'intervalle de la soupape de commande (81) est réalisée à la fin ou après la fin d'une opération d'évacuation d'air du conduit (70) d'évacuation d'air et du conduit pneumatique principal (60).

11. Procédé selon l'une des revendications 9 ou 10, **caractérisé en ce qu'**une première commande électromagnétique d'intervalle de la soupape de commande (81) est réalisée avant, pendant ou après l'ouverture d'une soupape de passage (93, 93.S) disposée en amont du soufflet (91) et/ou de la réserve (92) sous pression.

12. Procédé selon l'une des revendications 9 à 11, **caractérisé en ce qu'**une deuxième commande électromagnétique d'intervalle de la soupape de commande (81) est réalisée pendant ou après la fermeture d'une soupape de passage (93, 93.S) prévue en amont du soufflet (91) et/ou de la réserve (92) sous pression.

13. Procédé selon l'une des revendications 9 à 12, **caractérisé en ce qu'**une deuxième commande électromagnétique d'intervalle de la soupape de commande (81) est réalisée à un instant indépendant du niveau de la pression qui règne dans le soufflet (91) et/ou dans la réserve (92) sous pression et en particulier à un instant auquel la pression qui règne dans le soufflet correspond à une pression résiduelle prédéterminée ou à la pression ambiante.
